(19) **Europäisches Patentamt**
**European Patent Office**
**Office européen des brevets**

(11) **EP 3 744 493 A1**

(12) **EUROPEAN PATENT APPLICATION**
published in accordance with Art. 153(4) EPC

(43) Date of publication:
**02.12.2020 Bulletin 2020/49**

(21) Application number: **19743106.7**

(22) Date of filing: **17.01.2019**

(51) Int Cl.:
**B29B 15/12** (2006.01)  **C08J 5/06** (2006.01)
**D06M 15/55** (2006.01)  **D06M 15/59** (2006.01)
**B29K 105/08** (2006.01)

(86) International application number:
**PCT/JP2019/001220**

(87) International publication number:
**WO 2019/146485 (01.08.2019 Gazette 2019/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.01.2018  JP 2018011438**
**26.01.2018  JP 2018011439**
**26.01.2018  JP 2018011450**

(71) Applicant: **Toray Industries, Inc.**
**Tokyo, 103-8666 (JP)**

(72) Inventors:
• **FUSE, Mitsuki**
**Nagoya-shi, Aichi 455-8502 (JP)**

• **TATEYAMA, Masaru**
**Nagoya-shi, Aichi 455-8502 (JP)**
• **HIRANO, Hiroshi**
**Nagoya-shi, Aichi 455-8502 (JP)**
• **SEIKE, Satoshi**
**Nagoya-shi, Aichi 455-8502 (JP)**
• **MATSUI, Akihiko**
**Nagoya-shi, Aichi 455-8502 (JP)**
• **URA, Kazuma**
**Nagoya-shi, Aichi 455-8502 (JP)**

(74) Representative: **Hoefer & Partner Patentanwälte mbB**
**Pilgersheimer Straße 20**
**81543 München (DE)**

(54) **REINFORCING FIBER BUNDLE BASE MATERIAL, PRODUCTION METHOD THEREFOR, FIBER REINFORCED THERMOPLASTIC RESIN MATERIAL USING SAME, AND PRODUCTION METHOD THEREFOR**

(57)    Provided is a reinforcing fiber bundle base material characterized in that a sizing agent comprising at least a polyamide resin is adhered to the surfaces of the reinforcing fibers, the number of fibers per unit width included in a reinforcing fiber bundle is at least 600 fibers/mm and less than 1,600 fibers/mm, and the drape level of the reinforcing fiber bundle is 120-240 mm. Also provided are a production method therefor, a fiber-rein-forced thermoplastic resin material using the same, and a production method therefor. The reinforcing fiber bundle base material can be applied in a plurality of molding processes involving fiber placement and a fiber-reinforced thermoplastic resin forming material, etc., and has excellent formation stability and impregnating characteristics.

FIG. 1

**Description**

Technical Field of the Invention

Our invention relates to a reinforcing fiber bundle base material and a production method for the reinforcing fiber bundle base material, generating less fluff and excellent in handling, formation stability and impregnation.

Background Art of the Invention

Fiber-reinforced resin plastics (FRP) made by impregnating reinforcing fibers with matrix resin satisfying required specification such as mechanical properties or weight saving have been used chiefly for the purposes of aero, aerospace and sports. Such an FRP can be produced typically by known autoclave molding method. In the autoclave molding method, prepregs of reinforcing fiber bundle group preliminarily impregnated with matrix resin are laminated to be heated/pressurized in a molding die to mold the FRP. However, the use of prepreg might increase a production cost in spite of advantageous reliability of produced FRP.

The FRP can also be produced with excellent efficiency by injection molding methods such as resin transfer molding (RTM) and stamping molding. In the resin transfer molding, reinforcing fiber base material consisting of dry reinforcing fiber bundle group without preliminary matrix resin impregnation is laminated and impregnated with low-viscosity matrix resin liquid injected into the molding die so that the matrix resin is solidified to make an FRP. In the stamping molding, fiber-reinforced thermoplastic resin forming material preliminarily impregnated with thermoplastic resin is preheated and pressurized/cooled.

In the RTM method, the laminate of base material placed in the molding die has a three-dimensional shape preliminarily formed along a target product shape. Typically, the laminate of base material having a flat plate is formed into a predetermined three-dimensional shape to prepare a so-called preform placed in the molding die. To prepare the laminate of base material, attention is focused on fiber placement method in which reinforcing fiber bundles are placed sequentially at positions necessary to form a shape corresponding to the target product shape. Such a fiber placement method can greatly reduce the amount of edge materials to be discarded.

To place the reinforcing fiber bundles sequentially in the fiber placement method, the reinforcing fiber bundles should have a width compatible with the thread guide of fiber placement device. Unless the reinforcing fiber bundles have a width compatible with the thread guide of fiber placement device, the reinforcing fiber bundles might have misalignment to deteriorate the placement accuracy or might have a folded yarn at the yarn guide to deteriorate quality of products. In the fiber placement method, the reinforcing fiber bundles can be replaced by a tape of integrated reinforcing fiber bundles to be placed sequentially. Patent document 1 discloses a tape in which a plurality of carbon fiber bundles disposed in parallel with each other through gaps are integrated by bonding to thermoplastic nonwoven fabric.

To enhance mechanical properties of shaped products made from reinforcing fiber woven fabrics, it is possible to employ the techniques disclosed in Patent document 2 or 3. Patent document 2 discloses a fiber-reinforced thermoplastic resin composition having an enhanced interfacial adhesiveness between reinforcing fibers and thermoplastic resin. Patent document 3 discloses a knit fabric having a processability enhanced by adding sizing agent containing water-soluble thermoplastic resin and amphoteric surfactant. In spite of such a current improvement of mechanical properties and processability of reinforcing fiber woven fabric, further improvement is demanded.

In the stamping molding method, thermoplastic fiber-reinforced thermoplastic resin plastics (FRTP) are used as a base material. The FRTP may be unidirectional fiber-reinforced thermoplastic resin plastics made by impregnating reinforcing fiber bundles with thermoplastic resin or discontinuous fiber-reinforced thermoplastic resin plastics made by impregnating chopped fibers with resin. In comparison with prepregs impregnated with thermosetting resin, the FRTP is tougher and easy to preserve base materials while high-speed molding cycles such as injection molding and stamping molding can be achieved because resin curing reaction is unnecessary. Further, the FRTP excellent in recyclability and the repairability of welding, mending or the like is commercially available in various fields.

Patent document 4 discloses a long fiber-reinforced polyamide resin pellet capable of being used to produce shaped products excellent in fluidity and heat-aging resistance. In spite of such a current improvement of mechanical properties and function, further improvement of mechanical properties and its variability reduction is demanded.

However in comparison with thermosetting resin, thermoplastic resin having a higher molecular weight and a higher melt viscosity is difficult to achieve melt impregnation to reinforcing fiber and reduction of void ratio. Therefore, the low-void ratio of FRTP made by impregnating reinforcing fibers with thermoplastic resin having a higher molecular weight and a higher viscosity can only be achieved at low productivity and high production cost. On the other hand, an FRTP made from low-molecular weight/low-viscosity thermoplastic resin for easy impregnation can be applicable to limited purposes because of its poor mechanical properties. Patent document 5 discloses various methods for producing low-void ratio FRTP efficiently impregnated with thermoplastic resin having a high molecular weight and a high viscosity.

For examples of CFRP techniques applicable in automotive field, Patent document 6 discloses a production method of carbon fiber-reinforced shaped product excellent in mechanical properties, electrical conductivity and electromagnetic wave shield while Patent document 7 discloses a production method of carbon fiber-reinforced shaped product excellent in mechanical properties, electrical insulation and electromagnetic wave shield.

Accordingly, it has been difficult for one kind of reinforcing fiber to achieve both good formation stability and impregnation characteristics in various molding methods because each molding method requires unique specification such as excellent width precision or impregnation characteristics to materials (base materials), so that fiber kinds suitable for each molding method have to be selected.

Prior art documents

Patent documents

Patent document 1: JP2013-532739-A
Patent document 2: WO2007/037260
Patent document 3: WO2003/012188
Patent document 4: JP2016-190923-A
Patent document 5: JP2005-239843-A
Patent document 6: JP2013-177560-A
Patent document 7: JP2013-117014-A

Summary of the Invention

Problems to be solved by the Invention

Accordingly, it could be helpful to provide a reinforcing fiber bundle base material, which is excellent in formation stability and impregnation characteristics and is applicable to fiber placement and a plurality of kinds of molding processes of fiber-reinforced thermoplastic resin forming material such as reinforcing fiber woven fabric.

Means for solving the Problems

To solve the above-described problem, our invention has a configuration as follows.

[1] A reinforcing fiber bundle base material having a reinforcing fiber surface to which a sizing agent adheres, wherein a reinforcing fiber bundle has a fiber number per unit width of 600 fibers/mm or more and less than 1,600 fibers/mm while the reinforcing fiber bundle has a drape level of 120 mm or more and 240 mm or less.

[2] The reinforcing fiber bundle base material according to [1], wherein the sizing agent contains a polyamide-based resin.

[3] The reinforcing fiber bundle base material according to [1] or [2], wherein the sizing agent contains a compound having a functional group of epoxy group, urethane group, amino group or carboxyl group or contains a mixture thereof.

[4] The reinforcing fiber bundle base material according to any one of [1] to [3], wherein a polyamide-based resin is in an outermost layer of the reinforcing fiber bundle surface.

[5] The reinforcing fiber bundle base material according to any one of [1] to [4], having a hardness of 39 g or more and 200 g or less.

[6] The reinforcing fiber bundle base material according to any one of [1] to [5], having an adhesion amount of a polyamide-based resin of 0.1 wt% or more and 5 wt% or less.

[7] The reinforcing fiber bundle base material according to any one of [1] to [6], having a width $W1$ before being immersed in water and having a width $W2$ after being immersed in water at 25°C for 5 min, wherein a width change rate of $W2/W1$ is 0.5 or more and 1.1 or less.

[8] The reinforcing fiber bundle base material according to any one of [1] to [7], having a drape level D2 in an air after being immersed in water at 25°C for 5 min and absolutely dried, wherein the drape level D2 is 110 mm or more and 240 mm or less.

[9] The reinforcing fiber bundle base material according to any one of [1] to [8], the reinforcing fiber bundle has an average width W1 and a width precision of W1 - 1 mm or more and W1 + 1 mm or less.

[10] A fiber-reinforced thermoplastic resin forming material comprising a group of the reinforcing fiber bundle base material, comprising a nonwoven fabric of the reinforcing fiber bundle base material according to any one of [1] to [9].

[11] A fiber-reinforced thermoplastic resin forming material comprising a group of the reinforcing fiber bundle base material, comprising a woven fabric of the reinforcing fiber bundle base material according to any one of [1] to [9].

[12] The fiber-reinforced thermoplastic resin forming material according to [10] or [11], containing a matrix resin.

[13] The fiber-reinforced thermoplastic resin forming material according to [12], wherein the matrix resin is made of a polyamide.

[14] A production method of reinforcing fiber bundle base material, comprising processes (1) and (2),
the process (1) widening a reinforcing fiber bundle consisting of a plurality of single yarns,
the process (2) performing a heat treatment after adding a sizing agent made of a water-soluble polyamide to the widened reinforcing fiber bundle

[15] The production method of reinforcing fiber bundle base material according to [14], wherein the process (2) applies to the reinforcing fiber bundle a polymer solution of the water-soluble polyamide having a concentration of 0.1 wt% or more and 20 wt% or less.

[16] The production method of reinforcing fiber bundle base material according to [14] or [15], wherein the water-soluble polyamide has a tertiary amino group and/or an oxyethylene group in a main chain and is made by polymerizing diamine and carboxylic acid.

[17] A production method of fiber-reinforced thermoplastic resin forming material, comprising processes (1) to (4),
the process (1) widening a reinforcing fiber bundle consisting of a plurality of single yarns,
the process (2) performing a heat treatment after adding a sizing agent made of a water-soluble polyamide to the widened reinforcing fiber bundle,
the process (3) impregnating a sizing agent-added reinforcing fiber bundle with a melted thermoplastic resin,
the process (4) cutting the thermoplastic resin-impregnated reinforcing fiber bundle to prepare a fiber-reinforced thermoplastic resin forming material.

[18] The production method of fiber-reinforced thermoplastic resin forming material according to [17], wherein the process (2) performs a heat treatment at 130 to 350°C after applying the water-soluble polyamide to the reinforcing fiber bundle.

[19] The production method of fiber-reinforced thermoplastic resin forming material according to [17] or [18], wherein the process (2) performs a heat treatment for 0.33 to 15 min after applying the water-soluble polyamide to the reinforcing fiber bundle.

[20] The production method of fiber-reinforced thermoplastic resin forming material according to any one of [17] to [19], wherein the process (2) applies to the reinforcing fiber bundle a polymer solution of the water-soluble polyamide having a concentration of 0.1 wt% or more and 20 wt% or less.

[21] The production method of fiber-reinforced thermoplastic resin forming material according to any one of [17] to [20], wherein the water-soluble polyamide has a tertiary amino group and/or an oxyethylene group in a main chain and is made by polymerizing diamine and carboxylic acid.

Effect according to the Invention

Our reinforcing fiber bundle having a reinforcing fiber bundle surface to which a sizing agent adheres can prevent widened reinforcing fiber bundles from reaggregating to achieve excellent unravelling, formation stability and high width precision suitable for automatic laminating process with auto fiber placement (AFP) device. Our reinforcing fiber bundle base material having high impregnation characteristics is applicable to a fiber-reinforced thermoplastic resin forming material as well as a fiber-reinforced thermosetting resin forming material.

Brief explanation of the drawings

[Fig. 1] Fig. 1 is a schematic side view showing an example of apparatus for manufacturing our reinforcing fiber bundle base material.

[Fig. 2] Fig. 2 is a schematic perspective view showing an example of reinforcing fiber base material used for our invention.

[Fig. 3] Fig. 3 is an operation flow chart showing timing examples of sizing agent-addition process in a production method of our reinforcing fiber bundle base material.

[Fig. 4] Fig. 4 is an operation flow chart showing timing examples of sizing agent-addition process in a production method including a drying process of our reinforcing fiber bundle base material.

[Fig. 5] Fig. 5 is an operation flow chart showing timing examples of sizing agent-addition process in a production method including a heat treatment process of our reinforcing fiber bundle base material.

[Fig. 6] Fig. 6 is an operation flow chart showing timing examples of sizing agent-addition process in a production method including a drying process and a heat treatment process of our reinforcing fiber bundle base material.

[Fig. 7] Fig. 7 is an operation flow chart showing timing examples of sizing agent-addition process to reinforcing fiber bundle.

[Fig. 8] Fig. 8 is another operation flow chart showing timing examples of sizing agent-addition process to reinforcing fiber bundle.

[Fig. 9] Fig. 9 is another operation flow chart showing timing examples of sizing agent-addition process to reinforcing fiber bundle.

[Fig. 10] Fig. 10 is another operation flow chart showing timing examples of sizing agent-addition process to reinforcing fiber bundle.

[Fig. 11] Fig. 11 is another operation flow chart showing timing examples of sizing agent-addition process to reinforcing fiber bundle.

[Fig. 12] Fig. 12 is schematic explanation view showing a measurement method of drape level.

Embodiments for carrying out the Invention

Hereinafter, our invention will be explained with reference to Figs. Our invention is not limited in particular to embodiments shown in the Figs.

First, reinforcing fiber bundle base material 100 will be explained. Reinforcing fiber bundle base material 100 is made by applying application resin (P) to reinforcing fiber bundle (which may be called just "fiber bundle") consisting of a plurality of single yarns.

Application resin (P) adherent to the surface of reinforcing fibers can improve formation stability such as width or fiber orientation of reinforcing fiber bundle base material 100 as well as handling ability for carrying sheet-shaped reinforcing fiber laminate base material consisting of a group of reinforcing fiber bundle material 100.

The adhering resin can further improve preforms in the handling ability such as adhesiveness between reinforcing fiber laminate base materials, desirable rigidity or formation stability capable of preventing yarn slippage of reinforcing fibers or the like.

Reinforcing fiber bundle base material 100 can be woven to make a reinforcing fiber woven fabric excellent in formation stability and handling ability.

Further, application resin (P) applied to the surface of reinforcing fibers can simplify the matrix resin impregnation process in a resin injection molding to improve productivity of FRP with high-speed impregnation.

Our reinforcing fiber bundle base material 100 can easily be impregnated with matrix resin to produce a unidirectional fiber-reinforced thermoplastic resin forming material having a low void ratio, even from high-molecular weight/high-viscosity thermoplastic resin difficult to achieve melt impregnation to reinforcing fiber and reduction of void ratio as compared to thermosetting resins. Thus, high-quality FRP shaped products can be formed with less defects. Further, a high impregnation speed to fiber bundles can be achieved to improve productivity of unidirectional fiber-reinforced thermoplastic resin forming material to reduce the production cost.

Furthermore, reinforcing fiber bundle base material 100 can be chopped to obtain chopped fiber bundles for discontinuous fiber-reinforced thermoplastic resin forming material. Our reinforcing fiber bundle base material 100 can suppress breakage and single yarn dispersion of chopped fiber bundle during cutting fibers so that a retention to a predetermined bundle formation can be improved. Namely, it is possible to produce chopped fiber bundles having a desirably uniform formation. Such fiber bundles oriented in plane can improve mechanical properties. Further, discontinuous fiber-reinforced thermoplastic resin forming material having a low void ratio can be produced from chopped fiber bundles excellent in resin impregnation.

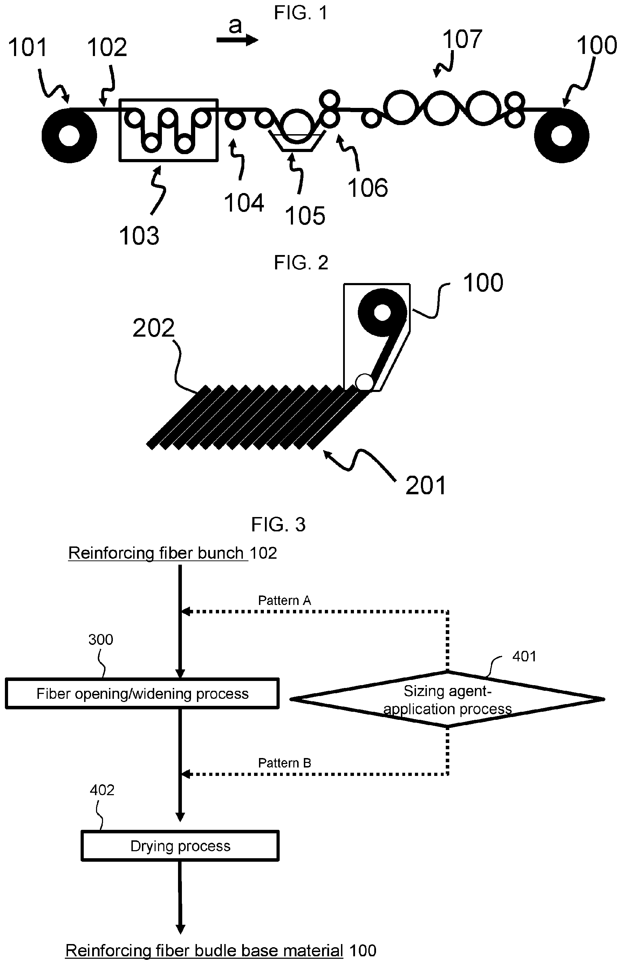

Our manufacturing method of reinforcing fiber bundle will be explained. Fig. 1 shows an apparatus for manufacturing reinforcing fiber bundle base material 100 from reinforcing fibers. Specifically, fiber bundle running direction a (arrow) indicates the longitudinal direction of fiber bundle. Fiber bundle 102 drawn from bobbin 101 is opened and widened with fiber-opening unit 103 to adjust widened width to a target width with width restriction roller 104. Then, it is immersed in application resin solution 105 having an adjusted concentration and its adhesion amount is adjusted with squeezing roller 106. It is subject to a heat treatment with heater roll 107 and is rolled up to manufacture reinforcing fiber bundle base material 100.

Our reinforcing fiber bundle base material 100 is suitably used for Automated Fiber Placement (AFP) and Automated Tape Layup (ATL) device. Since these devices used for the purposes of disposal rate reduction or automation of lamination process of reinforcing fiber base material 201 and laminated process automation require precision of width and fiber orientation after placement, reinforcing fiber base material 201 should have a good formation stability. Reinforcing fiber bundle base material 100 having a formation in which polyamide-shaped resin is applied to fiber surfaces is excellent in width stability and formation stability suitable for the AFP and ATL.

Reinforcing fiber bundle 102 is wound off a winding device provided at upstream side in fiber bundle running direction a. Reinforcing fiber bundle 102 may be wound off by a winding method, such as lateral winding method to pull it out in the direction orthogonal to the rotary shaft of bobbin or a longitudinal winding method to pull it out in the same direction as the rotary shaft of bobbin (paper pipe). From a viewpoint of less release twist, it is preferable to employ the lateral winding method.

Further, bobbin 101 can be placed toward any positional direction when wound off. When bobbin 101 stabbed into a creel is provided in a positional direction that end face of bobbin 101 at a side other than the surface fixing creel rotary shaft is directed to a direction other than the horizontal direction, it is preferable that a predetermined tension is applied to reinforcing fiber bundle 102 to hold the bobbin. When the tension is not applied to reinforcing fiber bundle 102, reinforcing fiber bundle 102 might fall off the package (roll body made by reinforcing fiber bundle 102 rolled up with bobbin 101) or alternatively, reinforcing fiber bundle 102 fallen off the package might be rolled up with the creel rotary shaft to make it difficult to wind off.

The package may be wound off by a surface winding method to wind reinforcing fiber bundle 102 off the package rolling on two rollers provided in parallel with each other as well as the package, other than the above-described method using the creel.

In the case of winding method using the creel, tension may be applied to reinforcing fiber bundle 102 to be wound off by braking the creel attached to a belt of which an end is fixed while the other end is pulled by a weight or spring. In this case, it is effective to change the brake force according to the winding diameter to stabilize tension.

The fiber bundle width and the number of single yarns per unit width in the fiber bundle width direction can be adjusted by opening/widening reinforcing fiber bundle 102. The "fiber-opening/widening" means a process to increase the width of fiber bundle 102.

The fiber-opening/widening process is not limited in particular, and is preferably a vibration widening method to make it pass through a vibration roller or an air widening method to blow compressed air to it.

Fiber-opening/widening unit 201 comprises a vibration roller to vibrate reinforcing fiber 102 in the vertical or horizontal direction orthogonal to the running direction. Fiber-opening/widening unit 103 may be provided with a heater (not shown) to soften the sizing agent adhering to the reinforcing fiber bundle surface. Yarn width $w0$ of reinforcing fiber bundle 102 pulled out from bobbin 101 is widened to width $w1$ of reinforcing fiber bundle 102 after fiber-opening/widening, and then the width is adjusted to width $w2$ ($w1 > w2$) with width restriction roller 104. It is preferable that width $w2$ is adjusted according to the basis weight required for reinforcing fiber base material 201. To improve the width precision of reinforcing fiber bundle base material 100, heater roll 107 may have a groove.

It is preferable to open/widen fiber bundle 100 comprising fibers having a fiber number per unit width of 600 fibers/mm or more. It is more preferably 700 fibers/mm or more, and is further preferably 800 fibers/mm or more. It is preferable that the fiber number per unit width is less than 1,600 fibers/mm. It is more preferably less than 1,400 fibers/mm, and is further preferably less than 1,250/mm. The fiber number per unit width of less than 600 fibers/mm might cause a cracked fiber bundle so that the fiber bundle cannot be widened by a desirable width. It might also generate many fluffs to deteriorate the process passability. The fiber number per unit width of 1,600 fibers/mm or more might deteriorate the winding characteristics of bobbin or deteriorate the productivity because of bad resin impregnation in the resin impregnation process.

It is preferable that reinforcing fiber bundle base material 100 has average bundle width of 1 mm or more. It is more preferably 2 mm or more, preferably 3 mm or more. The average width of less than 1mm might deteriorate the weaving efficiency of reinforcing fiber woven fabric. It is preferable that reinforcing fiber bundle base material 100 has average bundle width of 100 mm or less. It is more preferably 50 mm or less, preferably 30 mm or less. The average width of more than 100mm might not achieve desirable mechanical properties because of deteriorated resin impregnation to reinforcing fiber woven fabric.

It is preferable that reinforcing fiber base material 100 has a width precision of W1 - 1 mm or more, where W1 is average fiber bundle width material width. It is more preferably W1 - 0.7 mm or more, preferably W1 - 0.5 mm or more. It is preferable that reinforcing fiber base material 100 has a width precision of W1 + 1 mm or less. It is more preferably W1 + 0.7 mm or less, preferably W1 + 0.5 mm or less. When reinforcing fiber bundle base material 100 has a width of less than W1 - 1 mm or more than W1 + 1 mm, such a poor width precision of reinforcing fiber bundle base material 100 might generate gaps among strands of reinforcing fiber base material laminated by the AFP method to deteriorate physical properties of fiber-reinforced resin shaped product.

In case that reinforcing fiber bundle 102 changes in tension during manufacturing reinforcing fiber bundle base material, at least one of tension detection means may detect tension of reinforcing fiber bundle 102. Alternatively, it is possible to calculate a difference of tensions detected with a plurality of the tension detection means. The detection means of tension or tension difference may be provided separately or in combination thereof. It is preferable that the tension detection means is provided at a position distant by 10 to 1,000 mm forward or backward in the longitudinal direction of fiber bundle 102.

It is preferable that a widening means is controlled according to a detected value of the tension or tension difference. It is preferable that the upper limit of the tension is set to 0.01 to 5 N/mm while the upper limit of tension difference is set to 0.01 to 0.8 N/mm. The upper limits may be fluctuated within ±10% according to the condition of fiber bundle 100. The unit [N/mm] of the tension and tension difference corresponds to a force acting per unit width of reinforcing fiber bundle 102.

Reinforcing fiber bundle 102 should run at a stable speed with less change, preferably at a constant speed.

Reinforcing fiber bundle 102 is made from a plurality of single yarns which are not limited in particular. It is preferable that the reinforcing fiber bundle is made of at least one selected in a group consisting of carbon fiber, aramid fiber and glass fiber. Each of them may be used solely. Alternatively, two or more kinds thereof may be used in combination. Above all, it is preferable that it is made of carbon fiber capable of providing a composite material excellent in lightness and strength. It is possible that the carbon fiber is a PAN-based carbon fiber or a pitch-based carbon fiber. It is preferable that an average fiber diameter is 3 to 12 $\mu$m, preferably 6 to 9 $\mu$m.

The carbon fiber is generally available in a roll body (package) of fiber bundle of 3,000 to 60,000 fibers of single yarns made of continuous fiber rolled up with a bobbin. It is preferable that the fiber bundle is non-twisted, although fiber bundles twisted during conveyance can be used. From a viewpoint of low cost of final products, it is preferable to employ a so-called large tow containing many single fibers because the more the number of single yarns is the cheaper the fiber bundle per unit weight is, although the number of single yarns is not limited in particular. The large tow may have a so-called doubled formation made by rolling up fiber bundles into a bundle.

It is more preferable that the fiber bundle has a carbon fiber number of 10,000 to 60,000. When the carbon fiber has a single fiber number of less than 3,000, reinforcing fiber bundle base material 100 might decrease the carbon fiber basis weight of reinforcing fiber bundle base material 100 to deteriorate productivity because of much time to place the greater number of reinforcing fiber bundle base material 100 respectively to fit a product shape by the fiber placement method. When the carbon fiber has a single fiber number of more than 60,000, reinforcing fiber bundle base material 100 might increase the carbon fiber basis weight per layer of reinforcing fiber bundle base material 100 to deteriorate orientation design flexibility because of too much basis weight to place the reinforcing fiber bundle base material 100 respectively to fit a product shape by the fiber placement method.

It is preferable that the reinforcing fiber is subjected to a surface treatment so that adhesiveness to matrix resin is improved in the reinforcing fiber composite material. The surface treatment may be electrolyzation, ozonation, ultraviolet treatment or the like. The sizing agent may be added so that the reinforcing fiber is prevented from fluffing or the reinforcing fiber is improved in strand bundling property or adhesiveness to matrix resin. The sizing agent may be added in a process different from a process of adding water-soluble polyamide (application resin (P)) at a timing during a production process of our reinforcing fiber bundle base material 100. The sizing agent, which is not limited in particular, may be a compound having a functional group such as epoxy group, urethane group, amino group and carboxyl group, wherein the compound may have one or more kinds thereof.

It is preferable that a solid adhesion of the sizing agent is 0.01 wt% or more. It is more preferably 0.1 wt% or more, and is further preferably 0.15 wt% or more. It is preferable that a solid adhesion of the sizing agent is less than 4 wt%. It is more preferably less than 3 wt%, and is further preferably less than 2 wt%. The adhesion of sizing agent of less than 0.01 wt% might deteriorate the surface adhesiveness between matrix and reinforcing fiber to deteriorate mechanical characteristics of composite material in manufacturing composite materials. The adhesion of sizing agent of more than 4 wt% might cause a bad effect on the adhesiveness between matrix and reinforcing fiber adversely.

It is preferable that a concentration of a polymer solution for sizing to make the sizing agent adhere to the surface of reinforcing fiber bundle 102 is 0.01 wt% or more. It is more preferably 0.05 wt% or more, and is further preferably 0.1 wt% or more. It is preferable that a concentration of a polymer solution for sizing is less than 10 wt%. It is more preferably less than 5 wt%, and is further preferably less than 1 wt%. The polymer solution containing too little amount of polymer might deteriorate the bundling property of reinforcing fiber bundle because little sizing agent adheres to each monofilament constituting the reinforcing fiber bundle 102, and might not be able to enhance adhesiveness and affinity between reinforcing fiber and matrix resin so that composite material having good mechanical characteristics can hardly be produced. On the other hand, the polymer solution containing too much amount of polymer might increase viscosity, so that the polymer solution might not disperse uniformly to each monofilament constituting reinforcement fiber bundle 102.

The sizing agent can be added by a well-known method. For example, spray method, roller immersing method, roller transferring method or the like are well known. These methods can be employed solely or in combination. Above all, it is preferable to employ the roller immersing method excellent in productivity and uniformity. When the reinforcing fiber bundle is immersed into the polymer solution, inside of the reinforcing fiber bundle can be impregnated with polymer solution by alternately performing opening and squeezing with a immersing roller provided in the polymer solution bath. The adhesion amount of sizing agent to the reinforcing fiber bundle can be adjusted by adjusting polymer solution concentration and squeezing roller.

Next, application resin (P) to adhere to reinforcing fiber bundles will be explained. Application resin (P) is a water-soluble bundling agent of reinforcing fiber bundle chiefly containing a water-soluble polyamide. The water-soluble polyamide has tertiary amino group and/or oxyethylene group in main chain and is made by polycondensation with diamine and carboxylic acid. It is preferable that the diamine is a monomer which has a piperazine ring, and a tertiary amino group in main chain, such as N,N'-bis (γ-amino propyl) piperazine or N-(β-aminoethyl) piperazine, alkyl diamine having an oxyethylene group in main chain, such as oxyethylene alkylamine or the like. The dicarboxylic acid may be adipic acid, sebacic acid or the like.

The water-soluble polyamide may be a copolymer. The copolymer component may be a lactam such as α-pyrrolidone, α-piperidone, ε-caprolactam, α-methyl-ε-caprolactam, ε-methyl-ε-caprolactam, ε-laurolactam or the like. The copolymer may be a binary or multicomponent copolymer although the copolymerization ratio should be selected so that a good water-solubility is maintained. From a viewpoint of complete water-solubility of polymer, it is preferable that the copolymerization ratio of a component having a lactam ring is 30 wt% or less.

Besides, even a polymer having a poor water solubility and a copolymerization ratio outside the preferable range can be used when the solution is made acidic with organic or inorganic acid to exhibit water-solubility. The organic acid may be acetic acid, chloroacetic acid, propionic acid, maleic acid, oxalic acid, fluoroacetic acid or the like while the inorganic acid may be a general mineral acid such as hydrochloric acid, sulfuric acid, phosphoric acid or the like.

The water-soluble polyamide may be used as a primary sizing agent to be added to reinforcing fibers to which the sizing agent has never been added, or may be used as a secondary sizing agent to be added to reinforcing fibers to which the sizing agent has been added.

It is preferable that the water-soluble polyamide has a solid adhesion amount of 0.1 wt% or more. It is more preferably 0.3 wt% or more, and is further preferably 0.5 wt% or more. It is preferable that the water-soluble polyamide has a solid adhesion amount of 5 wt% or less. It is more preferably 4 wt% or less, and is further preferably 3 wt% or less. When the water-soluble polyamide has an adhesion amount of less than 0.1 wt%, the produced composite material tends to deteriorate in surface adhesiveness between matrix and reinforcing fiber so that the composite material might exhibit poor mechanical properties. Further, fluff generated from branched filament might deteriorate winding out of the bobbin, or might wrap a nip roller or cutter blade. Further, the widened fiber bundles might be bundled by surface tension or the like during resin impregnation to generate gaps among strands to deteriorate physical properties of fiber-reinforced resin shaped product. When the water-soluble polyamide has an adhesion amount of more than 5 wt%, fiber bundles might be too much hardened with deteriorated flexibility, so that winding by the bobbin and winding out of the bobbin might not be performed smoothly. Further, yarn breakage might be caused at the time of cutting not to achieve an ideal chopped fiber formation. Unless the sizing agent has preliminarily been added to the reinforcing fiber, it is preferable that the sizing agent is added by the above-described preferable adhesion amount of the water-soluble polyamide.

When the solid adhesion amount of water-soluble polyamide is 0.1 wt% or more and 5 wt% or less, productivity can be improved with the effects such as improved winding property out of the bobbin and suppressed wrapping on the nip roller and cutter blade for reinforcing fiber bundle base materials 100 disposed in parallel in the automated lamination process by the AFP method. Further, holding property to a predetermined bundle formation and formation stability can be improved with suppressed breakage of cut reinforcing fiber bundle. Accordingly, fiber breakage of cut ends of reinforcing fiber bundle can be prevented to prepare a reinforcing fiber bundle having a desirable formation. Thus appropriately maintained alignment of the reinforcing fiber can improve mechanical properties. Further, the improved formation stability of reinforcing fiber bundle base material 100 can achieve a good width precision to decrease variance of basis weight of reinforcing fiber base material 201 made by laminating reinforcing fiber bundle base material 100 so that variance of mechanical properties of shaped product can be decreased.

Furthermore, reinforcing fiber bundle base material 100 makes it possible to easily and efficiently provide reinforcing fiber bundles having a desirable formation and fiber width by continuously and stably slitting reinforcing fiber bundles in the fiber direction. Particularly, reinforcing fiber bundle base material 100 capable of being slit continuously for either fiber bundles containing twists or many single yarns of large tow can be provided. Further, cheap large tow can be subjected to a continuous slitting process to reduce material cost and manufacturing cost of shaped product.

When the sizing agent has been added to the reinforcing fiber bundle by the above-described preferable range of adhesion amount of the sizing agent, it is preferable that the total adhesion amount of the primary sizing agent and the secondary sizing agent is 0.11 wt% or more and 9 wt% or less. It is more preferably 0.2 wt% or more or 6 wt% or less, preferably 0.5 wt% or more or 3 wt% or less.

It is preferable that the water-soluble polyamide is uniformly adherent to the surface of reinforcing fiber. To make the sizing agent uniformly adherent as such, it is possible that fiber bundles are immersed with a roller in a sizing agent treatment liquid of polymer solution made by dissolving the water-soluble polyamide of 0.1 wt% or more and 20 wt% or less, preferably 1 wt% or more or 10 wt% or less. It is also possible that fiber bundles are contacted to the sizing agent treatment liquid adhering to a roller and that mist of the sizing agent treatment liquid is sprayed to fiber bundles, although it is not limited thereto in particular. From a viewpoint of conservation of environment, it is preferable that the water-soluble polyamide is dissolved in water. It is preferable to control parameters such as sizing treatment liquid concentration, temperature and yarn tension so that active components of the sizing agent are uniformly adherent to fiber bundles by an appropriate range of adhesion amount. It is more preferable that fiber bundles are vibrated by supersonic at the time of sizing agent-addition process. It is possible to add the sizing agent by the same method as the above-described sizing agent-adhesion process.

To remove solvent such as water or alcohol in the water-soluble polyamide adhering to reinforcing fibers, it is possible to employ heat treatment, air-drying or centrifugal separation. From a viewpoint of cost, it is preferable to employ the heat treatment. Heating means such as hot wind, hot plate, roller and infrared heater can be used for the heat treatment. The condition of heat treatment is important from viewpoints of handling ability and adhesiveness with matrix materials. The water-soluble polyamide added to the fiber bundle is subjected to a heat treatment. It is preferable that the heat treatment is performed at 130°C or more, preferably 200°C or more. It is preferable that the heat treatment is performed at 330°C or less, preferably 280°C or less. The heat treatment temperature should be a temperature at which the water-soluble polyamide loses the water solubility. Because such a treatment makes the water-soluble polymer insoluble and less hydroscopic, the stickiness of strand of bundled filaments is suppressed to improve workability in a post processing while the adhesiveness with matrix materials is improved. Thus, easy-handling fiber bundles can be provided. It is also possible that a cross-linking promoter is added to the solvent so that the heat treatment temperature is lowered and the time is shortened. From a viewpoint of preventing the sizing agent from thermally deteriorating, it is possible that the heat treatment is performed after removing water by drying the fiber bundle at room temperature to 180°C.

It is preferable that the heat treatment of the fiber bundle to which the water-soluble polyamide is added is performed for 0.33 min or more and less than 15 min. It is more preferably 0.4 min or more and less than 10 min, and is further preferably 0.5 min or more and less than 5 min. Although it may depend on the heat treatment temperature, when the heat treatment time is less than 0.33 min, widened fiber bundles might be re-aggregated because of residual solubility of the water-soluble polyamide. Once the fiber bundle is re-aggregated, the formation having a desirable number of single yarns might be difficult to maintain. When the heat treatment time is 15 min or more, the water-soluble polyamide may deteriorate to deteriorate a contact between reinforcing fiber and matrix.

The sizing agent made of the water-soluble polyamide resin excellent in affinity to various matrix material greatly improves composite physical properties characteristics. Such an improvement is excellent in contact specifically with polyamide-based resin, polyimide-based resin, polyamide imide-based resin, polyether amide imide-based resin or epoxy-based resin.

The water-soluble polyamide used as the second sizing agent may be added to the reinforcing fiber in the same method as the primary sizing agent, or may be added in a manufacturing process of reinforcing fiber bundle base material 100. To manufacture reinforcing fiber bundle base material 100, it is general that a sizing agent is added to fiber bundles at any timing of the manufacturing process, such that the sizing agent is dissolved (or dispersed) in solvent (or dispersion media) to prepare a sizing treatment liquid to be applied to reinforcing fiber bundles and then the solvent or the like dried and vaporized is removed. As described later in detail, a widening process of fiber bundle may be performed between the application process and the drying process.

Next, the timing of adding the sizing agent of our invention will be explained. Fig. 3 shows an example of timings of the sizing agent-addition process in a production process of reinforcing fiber bundle base material 100. In Fig. 3, reinforcing fiber bundle base material 100 is processed from reinforcing fiber bundle 102 through fiber-opening/widening process 300, wherein sizing agent-application process 401 is performed before fiber-opening/widening process 300 in pattern A while sizing agent-application process 401 is performed after fiber-opening/widening process 300 in pattern B. It is possible to employ the timing of pattern A or pattern B.

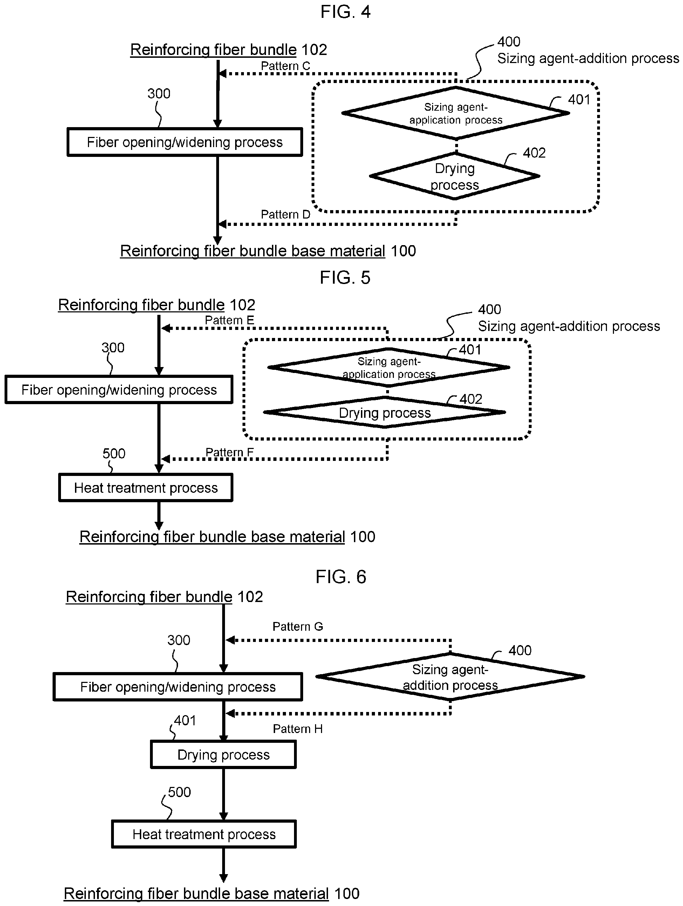

Fig. 4 shows an example of timings of the sizing agent-addition process including the sizing agent-application process and the drying process in a production process of reinforcing fiber bundle base material 100. Sizing agent-addition process 400 includes sizing agent-application process 401 and drying process 402. Fig. 4 shows patterns C and D in a process to form reinforcing fiber bundle base material 100 through fiber-opening/widening process 300 from fiber bundle 100, wherein sizing agent-addition process 400 is performed before fiber-opening/widening process 300 in pattern C while sizing agent-addition process 400 is performed after fiber-opening/widening process 300 in pattern D. It is possible to employ either timing of pattern C or pattern D. Pattern D is substantially the same as pattern B shown in Fig. 3.

Fig. 5 shows another example of timings of the sizing agent-addition process including the sizing agent-application process and the drying process in a production process of reinforcing fiber bundle base material 100 including heat treatment process in which reinforcing fiber bundle base material 100 is formed from reinforcing fiber bundle 102 through fiber-opening/widening process 300 and heat treatment process 500 in this order, wherein sizing agent-addition process 400 is performed before fiber-opening/widening process 300 in pattern E while sizing agent-addition process 400 is performed between fiber-opening/widening process 300 and heat treatment process 500 in pattern F.

Fig. 6 shows another example of timings of the sizing agent-addition process in a production process of reinforcing fiber bundle base material 100 including the drying process and the heat treatment process in which reinforcing fiber bundle base material 100 is formed from reinforcing fiber bundle 102 through fiber-opening/widening process 300, drying process 400 and heat treatment process 500 in this order, wherein sizing agent-addition process 400 is performed before fiber-opening/widening process 300 in pattern G while sizing agent-addition process 400 is performed between fiber-opening/widening process 300 and drying process 401 in pattern G. Pattern H is substantially the same as pattern F in Fig. 5.

Thus, the sizing agent can be added at various timings in our production process of reinforcing fiber bundle base material 100.

It is preferable that the reinforcing fiber bundle base material has a drape level D1 (bundle hardness) of 120mm or more. It is preferably 145mm or more, and is more preferably 170mm or more. It is preferable that the reinforcing fiber bundle base material has a drape level D1 (bundle hardness) of 240mm or less. It is preferably 230mm or less, and is more preferably 220mm or less. When drape level D1 is less than 120mm, filaments might be branched to generate fluff to deteriorate winding out of the bobbin and wrap the nip roller or cutter blade. When drape level D1 is more than 240mm, fiber bundles might be too much hardened with deteriorated flexibility, so that winding by the bobbin and winding out of the bobbin might not be performed smoothly. Further, yarn breakage might be caused at the time of cutting not to achieve an ideal chopped fiber formation. The drape level D1 means a bundle hardness determined by measuring the shortest distance between a side face of a rectangular solid stand and a tip of reinforcing fiber bundle which is not fixed to the stand, 5 minutes after the reinforcing fiber bundle cut into 30cm length of which part of 5cm from the other tip is placed on the end of the stand is fixed to the end of the stand so that 25cm of the reinforcing fiber bundle projects from the end of the stand at $23\pm5°C$.

Next, drape level D2 is determined by the same method as drape level D1, except that the reinforcing fiber bundle has been immersed in water at 25°C for 5 minutes and been taken out to be dried absolutely. It is preferable that drape level D2 (bundle hardness) is 110mm or more. It is preferably 145mm or more, and is more preferably 170mm or more. It is preferable that drape level D2 (bundle hardness) is 240mm or less. It is preferably 230mm or less, and is more preferably 220mm or less. When drape level D2 is less than 110mm, filaments might be branched to generate fluff to deteriorate winding out of the bobbin and wrap the nip roller or cutter blade. When drape level D2 is more than 240mm, fiber bundles might be too much hardened with deteriorated flexibility, so that winding by the bobbin and winding out of the bobbin might not be performed smoothly. Further, yarn breakage might be caused at the time of cutting not to achieve an ideal chopped fiber formation.

It is preferable that reinforcing fiber bundle base material 100 has a hardness of 39 g or more. It is more preferably 70 g or more, and is further preferably 120 g or more. It is preferable that reinforcing fiber bundle base material 100 has a hardness of 200 g or less. It is more preferably 190 g or less. The hardness of reinforcing fiber bundle base material 100 means a hardness to be determined by generally called "Handle-O-Meter" method to measure a resisting force as a hardness of a carbon fiber bundle placed on a test stand having a groove (20mm) into which a test piece is pressed up to a predetermined depth (8mm).

When the hardness of reinforcing fiber bundle base material 100 is less than 39 g, filaments might be branched to generate fluff to deteriorate winding out of the bobbin and wrap the nip roller or cutter blade. Further, low formation holding property to bundle reinforcing fiber bundle again at the time of resin impregnation or low width precision of reinforcing fiber bundle base material 100 might generate gaps among strands to deteriorate physical properties of fiber-reinforced resin shaped product. When it is more than 200 g, the effect of invention cannot be achieved because of decreased winding characteristics of winder for the reinforcing fiber bundle base material 100.

It is preferable that reinforcing fiber bundle base material 100 has width change rate W2/W1 of 0.5 or more, where W1 indicates an average width of reinforcing fiber bundle base material 100 before being immersed in water while W2 indicates a width of reinforcing fiber bundle base material 100 which is immersed in water at 25°C for 5 minutes and is taken out to be drained for 1 min. It is more preferably 0.6 or more, and is further preferably 0.7 or more. It is preferable that a width change rate W2/W1 is 1.1 or less. When the width change rate of reinforcing fiber bundle base material 100 is less than 0.5, widened fiber bundles might be re-aggregated because of residual solubility of the water-soluble polyamide. Once the fiber bundle is re-aggregated, the formation having a desirable width and number of single yarns might be difficult to maintain. Unless the fiber bundle form having desirably adjusted width and the number of single fiber yarns is maintained, it is difficult to prepare a fiber-reinforced resin shaped product having a desirable fiber bundle thickness and fiber orientation to balance the fluidity at the time of forming and mechanical properties of single yarns. When the width change rate W2/W1 of reinforcing fiber bundle base material 100 is more than 1.1, fiber bundles might be too much hardened with deteriorated flexibility, so that winding by the bobbin and winding out of the bobbin might not be performed smoothly. Further, formability might be deteriorated at the time of molding because of too hard fiber bundles.

Reinforcing fiber bundle base material 100 having a surface of reinforcing fiber coated with water-soluble polyamide can maintain a desirable fiber bundle width and thickness of desirably-widened reinforcing fiber bundle base material 100 as preventing the re-aggregation. As a result, such a desirable fiber width and thickness can be achieved even when reinforcing fiber bundle base material 100 has been subject to fiber separation process or slitting process. Further, when reinforcing fiber bundle base material 100 or separated reinforcing fiber bundle base material 100 is chopped to prepare chopped fiber bundles, holding property to a predetermined bundle formation can be improved with suppressed breakage and single yarn dispersion of chopped fiber bundle.

Reinforcing fiber bundle base material 201 consisting of reinforcing fiber bundle base material group 202 can be prepared by pulling out parallelly-oriented reinforcing fiber bundle base materials 100 from the bobbin shown in Fig. 2. The said phrase "parallelly-oriented" means that adjacent reinforcing fiber bundle base materials 100 are oriented without substantial intersection and substantial interlock. It is preferable that two straight lines approximating 100mm length of adjacent reinforcing fiber yarns have an inclination angle of 5° or less, preferably 2° or less. The approximation line can be drawn between an end and the other end of a part of 100mm length of reinforcing fiber bundle base material 100. The adjacent reinforcing fiber bundle base materials 100 may be overlapped or spaced with a predetermined distance corresponding to target basis weight of reinforcing fiber bundle base material 100. It is preferable that the distance has a length of 200% or less of the width of reinforcing fiber bundle base materials 100 when they are spaced. It is possible that reinforcing fiber bundle base materials 100 are overlapped over their full length. It is preferable that such parallelly-oriented reinforcing fiber yarn group 202 (namely, reinforcing fiber base material 201) has a basis weight distributed uniformly in the width direction. It is possible that reinforcing fiber base material 201 made from reinforcing fiber bundle base material group 202 is slit to control the width arbitrarily.

Reinforcing fiber base material 201 made by such a manufacturing apparatus contributes to improvement of mechanical properties (specifically compression strength) of the FRP because of stable width and basis weight as well as excellent fiber orientation.

Reinforcing fiber bundle base material 100 of which surface is coated with application resin are bonded to each other, so that single yarns generated by abrasion during the automated lamination process or the like are greatly decreased.

A reinforcing fiber laminate base material can be prepared by the fiber placement method in which reinforcing fiber bundle base materials 100 disposed in parallel are layered without interweaving to bond the layers.

Such prepared reinforcing fiber bundle base material can be woven to make a woven fabric in which warp, weft or both of them are made of the reinforcing fiber bundle base material. It is preferable that the woven fabric has a gap between warps of 0.1 to 0.8 mm. It is more preferably 0.15 to 0.6 mm, preferably 0.2 to 0.5 mm. The warps having too narrow gap between warps of the woven fabric might have a great amount of fluff generated by abrasion of reinforcing fiber yarns to deteriorate the quality of reinforcing fiber woven fabric, or might block the matrix resin impregnation when reinforcing fiber woven fabric is impregnated with matrix resin to form fiber-reinforced plastics.

Next, the slitting process and fiber separation process of reinforcing fiber bundle constituting our reinforcing fiber woven fabric will be explained.

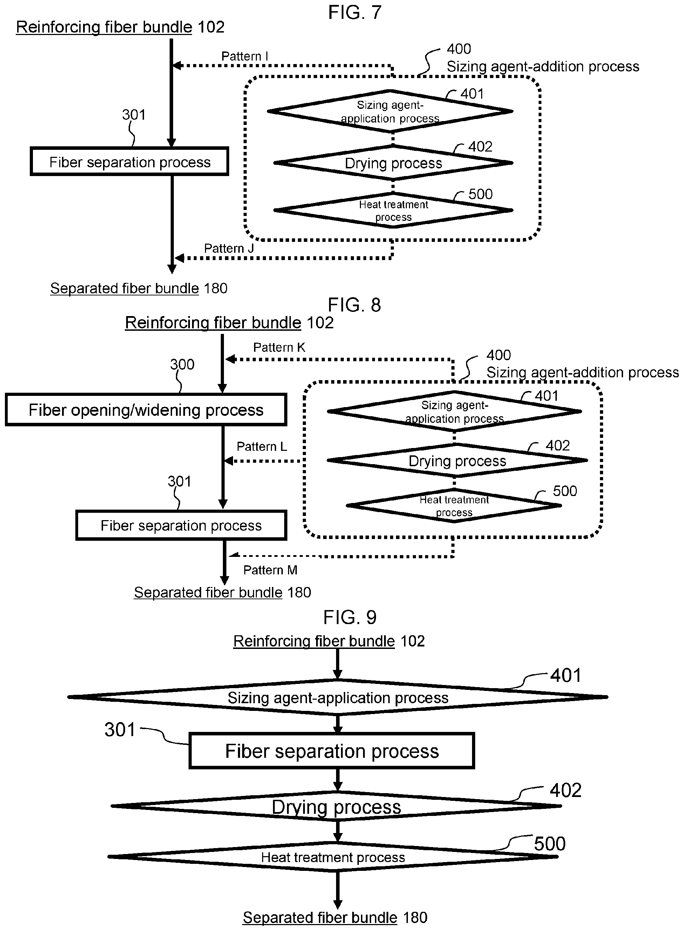

Fig. 7 shows an example of timing of sizing agent-addition process 400 in a production method of reinforcing fiber bundle constituting our reinforcing fiber woven fabric. In Fig. 7, sizing agent-addition process 400 includes sizing agent-application process 401, drying process 402 and heat treatment process 500. Besides, the sizing agent-addition process may not include the drying process and the heat treatment process. In Fig. 7, separated fiber bundle 180 is processed from reinforcing fiber bundle 102 through fiber separation process 301, wherein sizing agent-addition process 400 including sizing agent-application process 401, drying process 402 and heat treatment process 500 is performed before fiber separation process 301 in pattern I while sizing agent-addition process 400 is performed after fiber separation process 301 in pattern J. It is possible to employ the timing of pattern I or pattern J.

Fig. 8 shows an example of timing of sizing agent-addition process 400 in a production method of reinforcing fiber bundle including fiber opening/widening process 300. In Fig. 8, separated fiber bundle 180 is formed from fiber bundle 102 through fiber opening/widening process 300 and fiber separation process 301 in this order, wherein sizing agent-addition process 400 same as shown in Fig. 7 is performed before fiber opening/widening process 300 in pattern K, sizing agent-addition process 400 is performed between fiber opening/widening process 300 and fiber separation process 301 in pattern L and sizing agent-addition process 400 is performed after fiber separation process 301 in pattern M. It is possible to employ the timing of pattern K, pattern L or pattern M. From a viewpoint of desirable fiber separation process, it is preferable to employ the timing of pattern L. Besides, the sizing agent-addition process may not include the drying process and the heat treatment process even in the patterns shown in Fig. 8.

Fig. 9 shows another example of timing of the sizing agent-application process, the drying process and the heat treatment process in a production method of reinforcing fiber bundle constituting our reinforcing fiber woven fabric. In Fig. 9, sizing agent-application process 401, drying process 402 and heat treatment process 500 are performed at separated timings in sizing agent-addition process 400. Sizing agent-application process 401 is performed before fiber separation process 301 while drying process 402 and heat treatment process 500 are performed after fiber separation process 300.

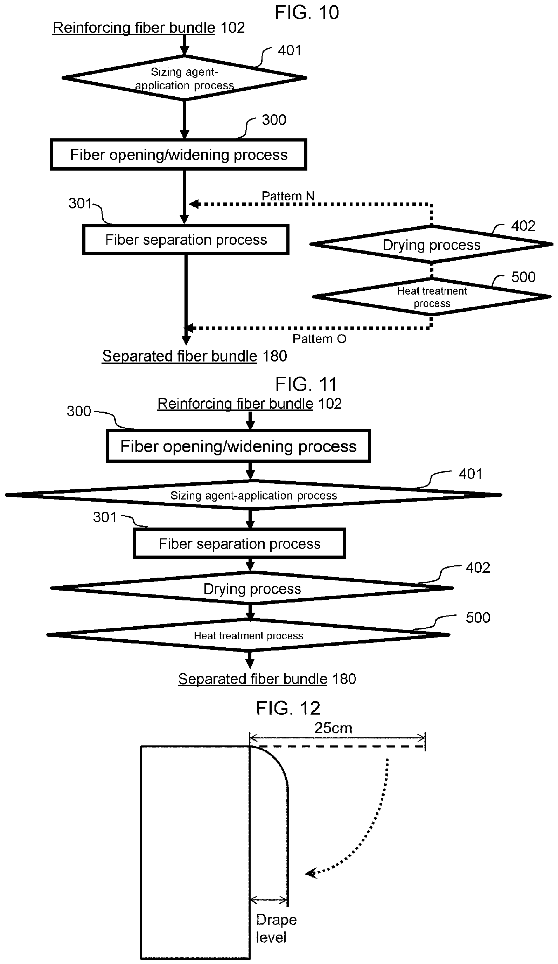

Fig. 10 shows another example of timing of sizing agent-application process, drying process and heat treatment process in a production method of reinforcing fiber bundle including fiber opening/widening process, other than the example shown in Fig. 8. In Fig. 10, separated fiber bundle 180 is formed from fiber bundle 100 through fiber bundle widening process 300 and fiber separation process 301 in this order and sizing agent-application process 401 of sizing agent-addition process is performed before fiber bundle widening process 300, wherein drying process 402 and heat treatment process 500 are performed between fiber bundle widening process 300 and fiber separation process 301 in pattern N while drying process 402 and heat treatment process 500 are performed after fiber separation process 301 in pattern O.

Fig. 11 shows yet another example of timing of sizing agent-application process, drying process and heat treatment process in a production method of reinforcing fiber bundle including fiber bundle widening process. In Fig. 11, separated fiber bundle 180 is formed from fiber bundle 100 through fiber bundle widening process 300 and fiber separation process 301 in this order and sizing agent-application process 401 of sizing agent-addition process is performed between fiber bundle widening process 300 and fiber separation process 301 while drying process 402 and heat treatment process 500 are performed after fiber separation process 301.

Matrix resin [M] may be a thermosetting resin such as epoxy resin, unsaturated polyester resin, vinyl ester resin, phenolic resin, epoxy acrylate resin, urethane acrylate resin, phenoxy resin, alkyd resin, urethane resin, maleimide resin or cyanate resin, a thermoplastic resin such as polyamide resin, polyacetal, polyacrylate, polysulfone, ABS, polyester, acrylic, polybutylene terephthalate (PBT), polyethylene terephthalate (PET), polyethylene, polypropylene, polyphenylene sulfide (PPS), polyetheretherketone (PEEK), a liquid crystal polymer, polyvinyl chloride, silicone or polytetrafluoroethylene as a fluorinated resin. It is preferable that a polyamide-based resin is selected from the thermoplastic resin. It is further preferable that an inorganic antioxidant is blended with polyamide. The thermoplastic polyamide resin may be a ring-opened polymer of cyclic lactam or a polycondensate of $\omega$-aminocarboxylic acid, such as nylon 6, nylon 11 and nylon 12, a polycondensate of diamine and dicarboxylic acid, such as nylon 610, nylon 612, nylon 6T, nylon 61, nylon 9T, nylon M5T and nylon MFD6, a copolymerized nylon polycondensate of two or more kinds of diamine and dicarboxylic acid, such as nylon 66·6·6I and nylon 66·6·12, or the like. From viewpoints of mechanical characteristics and cost, it is preferable to employ nylon 6, 66 or 610.

It is possible to add a copper halide or derivative thereof, such as copper iodide, copper bromide, copper chloride and complex salt of mercaptobenzimidazole and copper iodide. It is preferable to use copper iodide or complex salt of mercaptobenzimidazole and copper iodide. It is preferable that the copper halide or derivative thereof is added by 0.001 to 5 parts by weight to 100 parts by weight of thermoplastic polyamide resin. The additive amount of less than 0.001 parts might not sufficiently suppress resin decomposition, fume and odor at the time of preheating while the additive amount of more than 5 parts by weight might not improve the effect. It is preferably 0.002 to 1 parts by weight from a viewpoint of balance between heat stabilization effect and cost.

Our fiber-reinforced thermoplastic resin forming material fiber-reinforced thermoplastic resin forming material (first embodiment) can be prepared by impregnating a continuous reinforcing fiber bundle base material with thermoplastic resin. Our fiber-reinforced thermoplastic resin forming material (second embodiment) can be prepared by cutting a reinforcing fiber bundle base material into discontinuous chopped fiber bundles, dispersing the chopped fiber bundles in a chopped fiber bundle base material, and impregnating the chopped fiber bundle base material with polyamide resin. Our fiber-reinforced thermoplastic resin forming material (third embodiment) can be prepared in a pellet form by cutting a continuous reinforcing fiber bundle base material impregnated with thermoplastic resin.

In the first embodiment, the continuous reinforcing fiber bundle base material may be impregnated with thermoplastic resin by a method such as: film method, in which film-shaped thermoplastic resin is fused and pressurized to impregnate reinforcing fiber bundle base material with thermoplastic resin; commingling method, in which after spinning a mixture of fibrous thermoplastic resin and reinforcing fiber bundle base material, the fibrous thermoplastic resin is fused and pressurized to impregnate reinforcing fiber bundle base material with thermoplastic resin; powder method, in which after dispersing powdery thermoplastic resin into gaps of fibers in the reinforcing fiber bundle base material, the powdery thermoplastic resin is fused and pressurized to impregnate reinforcing fiber bundle base material with thermoplastic resin; or drawing method, in which reinforcing fiber bundle base material is immersed in fused thermoplastic resin and pressurized to impregnate reinforcing fiber bundle base material with thermoplastic resin. It is preferable to employ the drawing method capable of preparing various kinds of fiber-reinforced thermoplastic resin forming material fiber-reinforced thermoplastic resin forming materials different in thickness or fiber volume contents.

In the first embodiment, it is preferable that the fiber-reinforced thermoplastic resin forming material fiber-reinforced thermoplastic resin forming material has a thickness of 0.1 to 10 mm. The thickness of 0.1 mm or more can improve the strength of shaped product made of the fiber-reinforced thermoplastic resin forming material. It is more preferably 0.2 mm or more. From a viewpoint of easy impregnation of reinforcing fiber bundle base material with thermoplastic resin, it is preferable that the thickness is 1.5 mm or less, preferably 1 mm or less. It is more preferably 0.7 mm or less, preferably 0.6 mm or less.

In the first embodiment, it is preferable that the fiber-reinforced thermoplastic resin forming material fiber-reinforced thermoplastic resin forming material has a volume content of 20 to 70 vol% or more. Namely, it is preferable that the fiber-reinforced thermoplastic resin forming material fiber-reinforced thermoplastic resin forming material (100 vol%) contains reinforcing fibers by a proportion of 20 to 70 vol% (20 vol% or more and 70 vol% or less). The reinforcing fiber volume content of 20 vol% or more can improve the strength of shaped product made of the fiber-reinforced thermoplastic resin forming material fiber-reinforced thermoplastic resin forming material. It is more preferably 30 vol% or more, preferably 40 vol% or more. The reinforcing fiber volume content of 70 vol% or less can easily impregnate the reinforcing fibers with thermoplastic resin. It is more preferably 60 vol% or less, preferably 55 vol% or less. The volume content can be adjusted desirably by adjusting the feed of reinforcing fiber and thermoplastic resin.

The reinforcing fiber volume content (Vf) of the fiber-reinforced thermoplastic resin forming material fiber-reinforced thermoplastic resin forming material is calculated by the following formula from mass M0 [g] of fiber-reinforced thermoplastic resin base material and mass M1 [g] of residual reinforcing fiber left after heating the fiber-reinforced thermoplastic resin forming material fiber-reinforced thermoplastic resin forming material to burn out the thermoplastic resin component at 500°C in the air for 30 min.

$$Vf\ [vol\%] = (M1/\rho f)/\{M1/\rho f + (M0-M1)/\rho 1\} \times 100$$

pf: density [g/cm$^3$] of reinforcing fiber
pr: density [g/cm$^3$] of polyamide resin

It is possible to select the impregnation degree of fiber-reinforced thermoplastic resin forming material fiber-reinforced thermoplastic resin forming material according to the use and purposes. It is possible to employ a prepreg of which impregnation degree is enhanced, a semipreg of which impregnation degree is a half, and a fabric of which impregnation degree is low. It is generally preferable that the impregnation degree is high so that shaped products excellent in mechanical properties can be formed quickly.

In the second embodiment, the chopped fiber bundle base material may be impregnated with thermoplastic resin by a method such as: impregnating chopped fiber bundle base material with thermoplastic resin extruded by an extruder; dispersing thermoplastic resin powder in fiber layer of chopped fiber bundle base material to be melted thereafter; laminating thermoplastic resin film with chopped fiber bundle base material; impregnating chopped fiber bundle base material with thermoplastic resin solvent solution and volatilizing solvent thereafter; mixing thermoplastic resin fiber with discontinuous fiber; impregnating chopped fiber bundle base material with thermoplastic resin precursor to be polymerized into thermoplastic resin thereafter; or laminating melt-blow nonwoven fabric. The method of impregnating chopped fiber bundle base material with thermoplastic resin extruded by an extruder is advantageous because it is not necessary to process thermoplastic resin. The method of dispersing thermoplastic resin powder in fiber layer of chopped fiber bundle base material to be melted thereafter is advantageous because of easy impregnation. The method of laminating thermoplastic resin film with chopped fiber bundle base material is advantageous because of high quality of products.

In the second embodiment, it is preferable that the fiber-reinforced thermoplastic resin forming material fiber-reinforced thermoplastic resin forming material has a thickness of 0.1 to 10 mm. The thickness of 0.1 mm or more can improve the strength of shaped product made of the fiber-reinforced thermoplastic resin forming material fiber-reinforced thermoplastic resin forming material. It is more preferably 0.5 mm or more. From a viewpoint of easy impregnation of reinforcing fiber with thermoplastic resin, it is preferable that the thickness is 10 mm or less. It is more preferably 7 mm or less, preferably 5 mm or less.

In the second embodiment, it is preferable that the fiber-reinforced thermoplastic resin forming material fiber-reinforced thermoplastic resin forming material has a volume content of 20 to 70 vol% or more. Namely, it is preferable that the fiber-reinforced thermoplastic resin forming material fiber-reinforced thermoplastic resin forming material (100 vol%) contains discontinuous fibers of 20 vol% or more and 70 vol% or less. The discontinuous fiber volume content of 20 vol% or more can improve the strength of shaped product made of the fiber-reinforced thermoplastic resin forming material fiber-reinforced thermoplastic resin forming material. It is more preferably 30 vol% or more. The discontinuous fiber volume content of 70 vol% or less can easily impregnate the discontinuous fibers with thermoplastic resin. It is more preferably 60 vol% or less, preferably 50 vol% or less. The volume content can be calculated by the above-described formula (VI).

Even in the second embodiment, it is possible to select the impregnation degree of fiber-reinforced thermoplastic resin forming material fiber-reinforced thermoplastic resin forming material according to the use and purposes. It is generally preferable that the impregnation degree is high so that shaped products excellent in mechanical properties can be formed quickly.

In the second embodiment of our fiber-reinforced thermoplastic resin forming material fiber-reinforced thermoplastic resin forming material, thickness and volume content can be adjusted desirably by heating/compressing the base material with a pressing machine. The pressing machine capable of achieving temperature and pressure for impregnation with thermoplastic resin may be an ordinary pressing machine having a planar platen going up and down or so-called double belt pressing machine having a mechanism of a pair of endless steel belts running.

In the third embodiment, the continuous reinforcing fiber bundle base material may be impregnated with thermoplastic resin by a method (process (3)) such as: film method, in which film-shaped thermoplastic resin is fused and pressurized to impregnate reinforcing fiber bundle base material with thermoplastic polyamide resin; commingling method, in which after spinning a mixture of fibrous thermoplastic resin and reinforcing fiber bundle base material, the fibrous thermoplastic polyamide resin is fused and pressurized to impregnate reinforcing fiber bundle base material with thermoplastic resin; powder method, in which after dispersing powdery thermoplastic resin into gaps of fibers in the reinforcing fiber bundle base material, the powdery thermoplastic resin is fused and pressurized to impregnate reinforcing fiber bundle base material with thermoplastic resin; or drawing method, in which reinforcing fiber bundle base material is immersed in fused plastic resin and pressurized to impregnate reinforcing fiber bundle base material with thermoplastic resin. It is preferable to employ the drawing method capable of preparing various kinds of fiber-reinforced thermoplastic resin forming materials different in thickness or fiber volume contents.

In the third embodiment, it is preferable that the fiber-reinforced thermoplastic resin forming material has a weight content of 5 to 50 parts by weight to a whole thermoplastic resin of 100 parts by weight contained in the forming material. Namely, it is preferable that the fiber-reinforced thermoplastic resin forming material (100 wt%) contains reinforcing fibers by a proportion of 5 to 50 wt% (5 vol% or more and 50 vol% or less). The reinforcing fiber weight content of 5 wt% or more can improve the strength of shaped product made of the fiber-reinforced thermoplastic resin forming material. It is more preferably 10 wt% or more, preferably 20 wt% or more. The reinforcing fiber weight content of 50 wt% or less can easily impregnate the reinforcing fibers with thermoplastic resin. It is more preferably 45 wt% or less, preferably 40 wt% or less. The fiber content can be desirably adjusted by adjusting the feed of reinforcing fiber and thermoplastic resin.

It is possible to select the impregnation degree of fiber-reinforced thermoplastic resin forming material according to the use and purposes. It is generally preferable that the impregnation degree is high so that shaped products excellent in mechanical properties can be formed quickly.

It is preferable that a process of forming a cross section of sizing agent-added reinforcing fiber bundle base material before adding thermoplastic resin or thermoplastic resin-added reinforcing fiber bundle to produce a fiber-reinforced thermoplastic resin forming material having small variability of fiber number, size or shape. For example, an edge can be formed into a circular shape in the cross section of reinforcing fiber bundle biased in the width direction with a roll or a guide.

In cutting process (process (4)), thermoplastic resin-impregnated reinforcing fiber bundle is cut. It can be cut by any method including well-known methods. For example, the fiber bundle may be cut by being pressed onto a single or a plurality of disk-shaped blades or may be cut by shear force generated with two blades.

In the third embodiment, it is preferable that the fiber-reinforced thermoplastic resin forming material has a pellet shape. It is most preferable that the pellet shape has a size suitable for injection molding. The fiber-reinforced thermoplastic resin forming material having a pellet shape in which fibers having a length equal to or more than the pellet length are arranged approximately parallel to the longitudinal direction of the pellet can be formed into a shaped product having greatly improved mechanical properties.

To obtain a shaped product by the injection molding method from the fiber-reinforced thermoplastic resin forming material having a pellet shape, it is preferable that the forming is performed with a die heated to a temperature higher by 5 to 50°C than the heat distortion temperature of the thermoplastic resin. It is more preferable that the die is heated to a temperature higher than the heat distortion temperature by 10 to 30°C. The said heat distortion temperature means a temperature of deflection under load determined for a shaped product consisting of thermoplastic resin according to ISO 75 at flatwise load of 0.45MPa.

The fiber-reinforced thermoplastic resin forming material provided by our manufacturing method can be processed into an intermediate base material such as stampable sheet or prepreg before a final product or can be processed into a material for SMC (Sheet Molding Compound) or BMC (Bulk Molding Compound).

[Examples]

Hereinafter, Examples and Comparative examples will be explained. Besides our invention is not limited to the Examples or Comparative examples in particular.

(1) Raw materials

- Reinforcing fiber bundle [A-1]:
  Continuous carbon fiber bundle (made by ZOLTEK Corporation, "PX (registered trademark) 35") having fiber diameter of 7.2$\mu$m and single yarns of 50,000 is employed.
- Reinforcing fiber bundle [A-2]:
  Carbon fiber bundle (made by ZOLTEK Corporation, "PX 35") having single yarns of 50,000 is employed.
- Reinforcing fiber bundle [A-3]:
  Glass fiber bundle (240TEX made by Nitto Boseki Co., Ltd., single yarn number of 1,600) is used.
- Sizing agent [S-1]:
  Reactive urethane resin emulsion (made by Dai-ichi Kogyo Seiyaku Co., Ltd., "SUPERFLEX (registered trademark) R5000") is employed.
- Application resin [P-1]:
  Water-soluble polyamide (made by Toray Industries, Inc., "T-70") is employed.
- Application resin [P-2]:
  Water-soluble polyamide (made by Toray Industries, Inc., "A-90") is employed.
- Application resin [P-3]:
  Water-soluble polyamide (made by Toray Industries, Inc., "P-70") is employed.
- Application resin [P-4]:
  Water-soluble polyamide (made by Toray Industries, Inc., "P-95") is employed.
- Matrix resin [M-1]:
  Polyamide resin (made by Toray Industries, Inc., "Amilan (registered trademark) CM1001") is employed.

Matrix resin [M-2]:

Polypropylene master batch made of native polypropylene resin (made by Prime Polymer Co., Ltd., "Prime Polypro" (registered trademark) J106MG) of 90 mass% and acid-modified polypropylene resin (made by Mitsui Chemicals, Inc., "ADMER" (registered trademark) QE800) of 10 mass% is prepared.

(2) Measurement method of adhesion amount of sizing agent or water-soluble polyamide

About 5g of carbon fiber bundle with water-soluble polyamide is sampled in a heat resistant container. The container is dried up at 80°C under vacuum condition for 24 hours and then is cooled down to room temperature as preventing it from absorbing moisture. After weight m1 [g] of carbon fiber is measured, a whole container is subject to an ashing process at 450°C in nitrogen atmosphere. It is cooled down to room temperature as preventing it from absorbing moisture to measure weight m2 [g] of carbon fiber. Through the above-described processes, adhesion amount of sizing agent to carbon fiber is calculated according to the following formula. The measurement results of 10 pieces of fiber bundles are averaged.

$$\text{Adhesion amount of sizing agent [wt\%]} = 100 \times \{(m1-m2)/m1\}$$

(3) Measurement method of drape level

Reinforcing fiber bundle cut into 30cm and extended straight is placed on a flat stand as preventing it from curving or twisting. In case of causing curve or twist, it is preferable that it is removed by heating below 100°C or pressurizing below 0.1MPa. As shown in Fig. 7, the reinforcing fiber bundle base material cut into 30cm length is fixed to an end of a rectangular solid stand so that 25cm of the reinforcing fiber bundle base material projects from the end of the stand at 23±5°C. Namely, a part of 5cm from a tip of the reinforcing fiber bundle base material is placed on the end of the stand. Then 5 minutes later, drape level D1 is determined by measuring the shortest distance between a side face of the stand and a tip of the reinforcing fiber bundle base material which is not fixed to the stand. Then, the reinforcing fiber bundle base material which has been subjected to the measurement is immersed in water at 25°C for 5 minutes and been taken out to be drained. Next, drape level D2 is determined by the same method as drape level D1, except that the reinforcing fiber bundle base material has been immersed after being absolutely dried at 80°C for 24 hours at a vacuum condition. The measurement results of five samples n=5 are averaged.

(4) Measurement of hardness

The reinforcing fiber bundle base material is measured with a HANDLE-O-Meter ("CAN-1MCB" made by DAIEI KAGAKU SEIKI MFG. Co., Ltd.) according to JIS L-1096E (HANDLE-O-Meter method). The test piece for measuring a hardness has length of 10cm while the reinforcing fiber bundle base material is opened to adjust the width to 1mm with respect to filament number 1,700 to 550. The slit width is set to 20mm. The hardness is determined as a resisting force [g] of a test piece of reinforcing fiber bundle base material placed on a test stand having the slit groove into which the test piece is pressed up to a predetermined depth (8mm). The measurement results of 3 times are averaged to determine a hardness of reinforcing fiber bundle base material.

(5) Measurement method of average fiber number

**[0109]** Weight per unit length a [mg/m] of filament constituting reinforcing fiber bundle is calculated from weight per unit length of reinforcing fiber bundle and filament number. Next, the number of fibers constituting the bundle is calculated by Formula (6) from measured values of fiber length c [mm] and weight b [mg] of reinforcing fiber bundle cut into lengths around 10mm. The average fiber number is defined as an average number of fibers among 20 pieces of reinforcing fiber bundles.

$$\text{Average fiber number} = (b \times 1{,}000/(a \times c))$$

(6) Measurement method of average fiber bundle width

The bundle width is measured at 20 points at intervals of every 30cm along the longitudinal direction of fiber bundle to calculate an arithmetic average fiber bundle width.

(7) Fiber number per unit width

The fiber number per unit width is calculated by dividing average fiber number by average fiber bundle width.

(8) Measurement method of average bundle thickness

The bundle thickness is measured at 20 points at intervals of every 30cm along the longitudinal direction (fiber direction) of fiber bundle to calculate an average fiber bundle thickness.

(9) Measurement of width change rate of reinforcing fiber bundle base material

A reinforcing fiber bundle base material which has been prepared by widening to 85mm width from 30mm width is cut into 230mm length. The first position of 30mm from one edge of the bundle is nipped with a clip to measure widths at 5 points between the first position and the second position of 100mm from the other edge. Width W1 before immersion is defined as an average value of the measured widths. Then it is immersed in water at 25°C for 5min and is taken out to hang it so that the clipped side is up while draining water for 1 min. The width is measured at 5 points between the first position and the second position of 100mm from the other edge. Width W2 after immersion is defined as an average value of the measured widths. The width change rate of reinforcing fiber bundle base material is calculated by the following formula.

$$\text{Width change rate} = W2/W1$$

<Process stability>

Wrapping characteristics on rollers such as heating roller, fluff generation and winding characteristics by bobbin are evaluated in the production process of reinforcing fiber bundle base material according to the following standard.

Good: Practicable level
Acceptable: Passably-acceptable level
NG: Unpractical level

<Production of reinforcing fiber base material (AFP process stability)>

The reinforcing fiber bundles are parallelly-oriented on a stand with a fiber-placement head to produce a reinforcing fiber base material having a shape of 250mm × 250mm square. Unravelling characteristics from bobbin, fluff generation and wrapping characteristics on rollers are evaluated to confirm practicability in the production process according to the following standard.

Good: Practicable level
Acceptable: Passably-acceptable level
NG: Unpractical level

[Impregnation characteristics evaluation]

Cross sections of the fiber-reinforced thermoplastic resin forming material obtained in Examples and Comparative examples are observed in the thickness direction as follows. Samples prepared by embedding fiber-reinforced thermoplastic resin forming material with epoxy resin are polished to make a cross section in the thickness direction of the fiber-reinforced thermoplastic resin forming material well observed. The polished samples are photographed at magnification of 400 times with an ultra deep color 3D shape measurement microscope VHX-9500 (controller part) / VHZ-100R (measurer part) (made by Keyence Corporation). Images are taken within 500 μm width × thickness of the fiber-reinforced thermoplastic resin forming material. Resin area and void area are measured with the taken images to calculate an impregnation rate by the following formula.

$$\text{Impregnation rate [\%]} = 100 \times (\text{Total area of resin})/\{(\text{Total area of resin})+(\text{Total area of voids})\}$$

Voids tend to decrease at a high impregnation characteristics while voids tend to increase at a low impregnation characteristics. Accordingly, impregnation characteristics of fiber-reinforced thermoplastic resin forming material are evaluated by the impregnation rate according to the following standard.

Good: Impregnation rate ≥ 98%
NG: Impregnation rate < 98%

[Production method of fiber-reinforced thermoplastic resin forming material]

To produce the first embodiment of fiber-reinforced thermoplastic resin forming materials, four reinforcing fiber bundle base materials wound around each bobbin are continuously unwound off the bobbin through a yarn guide. The continuously unwound reinforcing fiber bundle base material is impregnated with polyamide resin supplied constantly from a feeder into an impregnation die. The carbon fiber bundle impregnated with polyamide resin in the impregnation die is continuously drawn out with a draw roller at 1m/min of draw speed through a nozzle of the impregnation die at a process temperature of the melting point + 60°C. The drawn-out carbon fiber bundle is cooled down with a cooling roller to solidify the polyamide resin to make a continuous fiber-reinforced thermoplastic resin forming material wound by a winder. Thus obtained fiber-reinforced thermoplastic resin forming material has thickness of 0.3mm, width of 50mm and volume content Vf of 55%, wherein reinforcing fibers are oriented unidirectionally. The above-described evaluation of impregnation characteristics is performed with the obtained fiber-reinforced thermoplastic resin forming material. Table 1 shows the evaluation results.

(10) Weaving performance evaluation

The weaving performance is evaluated by the following standard of feasibility of continuous operation over 300m.

A: Operation is continued beyond 300m or more.
C: Operation is not continued beyond 300m or more.

(11) Evaluation of resin impregnation characteristics for woven fabric

A laminate of polyamide 6 resin (made by Toray Industries, Inc., "Amilan" (registered trademark) CM1001) layered on the top face of two stacked unidirectional woven fabrics having the same weight as that of the woven fabric is subject to a polishing of cross section after pressurizing at 1MPa for 5min to evaluate the characteristics of resin impregnation inside woven fabric.

    A: Reinforcing fiber bundle is impregnated with resin by 90% or more.
    B: Reinforcing fiber bundle is impregnated with resin by 50% or more and less than 90%.
    C: Reinforcing fiber bundle is impregnated with resin by less than 50%.

(11) Evaluation of mechanical properties (bending properties)

Test pieces of 10 samples of each level prepared according to JIS K7074 (1988) are subject to a bending test to determine bending strength and CV (Coefficient of Variance) level [%] of bending strength. The bending strength is evaluated according to the following standard: "C" of less than 150MPa; "B" of 150MPa or more and less than 200MPa; and "A" of 200MPa or more. The CV level [%] of bending strength is evaluated according to the following standard: "C" of more than 15%; "B" of 10% or more and less than 15%; and "A" of less than 10%. The smaller CV level corresponds to the smaller variance of mechanical properties.

(Example 1)

Fiber bundle [A-1] was wound off with a winder at constant speed of 10m/min through a vibration widening roll vibrating along the axis direction at 10 Hz to be subjected to a widening process, so that a widened fiber bundle having width of 50mm was prepared through a width restriction roll of 50mm width.
The obtained widened fiber bundle wound off at constant speed of 5m/min was continuously immersed in sizing treatment liquid of sizing agent [S-1] diluted with pure water to coat the widened fiber bundle with the primary sizing agent. Then the widened fiber bundle coated with the primary sizing agent was dried to remove moisture with a hot roller heated to 150°C and a drying furnace (atmospheric condition) heated to 200°C. Adhesion amount of such obtained primary sizing agent-added widened fiber bundle was calculated as 1.5 wt% according to the above-described measurement method of adhesion amount of sizing agent or water-soluble polyamide. The widened fiber bundle was immersed in the sizing treatment liquid while the tension applied to the fiber bundle was being adjusted in case the width of widened fiber bundle was shrunk by surface tension. Then such an obtained primary sizing agent-added widened fiber bundle was continuously immersed in oleoresin treatment liquid of application resin [P-1] diluted with pure water to coat the sizing agent-added widened fiber bundle with the application resin. Then the sizing agent-added widened fiber bundle coated with the secondary sizing agent (application resin [P-1]) was dried to remove moisture with a hot roller heated to 250°C and a drying furnace (atmospheric condition) heated to 250°C, and was subjected to a heat treatment for 1.5 minutes to obtain a reinforcing fiber bundle base material. Adhesion amount of application resin of such obtained reinforcing fiber bundle base material was calculated as 0.1 wt% according to the above-described measurement method of adhesion amount of sizing agent or water-soluble polyamide. Besides such a calculated amount corresponds to a total adhesion amount which doesn't include the amount of sizing agent initially added to the sizing agent-added widened fiber bundle.
When the reinforcing fiber bundle base material of 1,500m was prepared without any yarn breakage, the reinforcing fiber bundle base material having a stable width was obtained although a little wrapping was caused. Accordingly, the process passability was evaluated as "Acceptable". Table 1 shows results of width change rate W2/W1 of the reinforcing fiber bundle base material as well as results of drape test and hardness measurement.
As a result, the reinforcing fiber bundle base material had 1,000 fibers/mm of fiber number per unit width and drape level D1 of 130mm.
Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Fluffs were slightly deposited at the fiber-placement head and therefore the AFP process stability was evaluated as "Acceptable".
Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Example 2)

The production and evaluation were performed in the same manner as Example 1, except that adhesion amount of application resin [P-1] was 0.5 wt%. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,111 fibers/mm of fiber number per unit width and drape level D1 of 153mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Example 3)

The production and evaluation were performed in the same manner as Example 1, except that adhesion amount of application resin [P-1] was 1 wt%. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,020 fibers/mm of fiber number per unit width and drape level D1 of 171mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Example 4)

The production and evaluation were performed in the same manner as Example 1, except that adhesion amount of application resin [P-1] was 2 wt%. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,087 fibers/mm of fiber number per unit width and drape level D1 of 210mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Example 5)

The production and evaluation were performed in the same manner as Example 1, except that adhesion amount of application resin [P-1] was 3 wt%. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,111 fibers/mm of fiber number per unit width and drape level D1 of 215mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Example 6)

The production and evaluation were performed in the same manner as Example 1, except that adhesion amount of application resin [P-1] was 5 wt%. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,020 fibers/mm of fiber number per unit width and drape level D1 of 235mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Comparative example 1)

The production and evaluation were performed in the same manner as Example 1, except that adhesion amount of application resin [P-1] was 7 wt%. When the reinforcing fiber bundle base material of 1,500m was prepared, the reinforcing fiber bundle base material had hard fiber bundles and poor winding characteristics by bobbin and was not obtained stably. Accordingly, the process passability was evaluated as "NG". The obtained reinforcing fiber bundle base material had 1,000 fibers/mm of fiber number per unit width and drape level D1 of 242mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since the reinforcing fiber bundles were not desirably oriented and a reinforcing fiber base material having a stable width and stable strand interval was not produced, the AFP process stability was evaluated as "NG".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "NG" from these results.

(Comparative example 2)

Fiber bundle [A-1] was wound off with a winder at constant speed of 10m/min through a vibration widening roll vibrating along the axis direction at 10 Hz to be subjected to a widening process, so that a widened fiber bundle having width of 50mm was prepared through a width restriction roll of 50mm width.

The obtained widened fiber bundle was continuously immersed in sizing treatment liquid of sizing agent [S-1] diluted with pure water to coat the widened fiber bundle with the primary sizing agent. Then the widened fiber bundle coated with the primary sizing agent was dried to remove moisture with a hot roller heated to 150°C and a drying furnace (atmospheric condition) heated to 200°C. Adhesion amount of such obtained primary sizing agent-added widened fiber bundle was calculated as 1.5 wt% according to the above-described measurement method of adhesion amount of sizing agent or water-soluble polyamide. The widened fiber bundle was immersed in the sizing treatment liquid while the tension applied to the fiber bundle was being adjusted in case the width of widened fiber bundle was shrunk by surface tension.

When the primary sizing agent-added widened reinforcing fiber bundle base material of 1,500m was prepared, single yarn fluff caused wrapping on the roller or the like and the widening process were not performed stably. Accordingly, the process passability was evaluated as "NG" or "Acceptable".

The evaluation was performed in the same manner as Example 1, except that secondary sizing agent-application process was not performed. The obtained reinforcing fiber bundle base material had 1,000 fibers/mm of fiber number per unit width and drape level D1 of 39mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since entanglement and fluff were observed while the reinforcing fiber bundles were not desirably oriented and a reinforcing fiber base material having a stable width and stable strand interval was not produced, the AFP process stability was evaluated as "NG".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "NG" because voids were observed in the fiber bundle. Accordingly, comprehensive evaluation (Good: Practicable level, NG: Unpractical level) was "NG" from these results.

(Comparative example 3)

Fiber bundle [A-1] was wound off with a winder at constant speed of 10m/min through a vibration widening roll vibrating along the axis direction at 10 Hz to be subjected to a widening process, so that a widened fiber bundle having width of 30mm was prepared through a width restriction roll of 30mm width.

The evaluation was performed in the same manner as Example 4, except that the widened width was 30mm. As a result, when the primary sizing agent-added reinforcing fiber bundle base material of 1,500m was prepared, the reinforcing fiber bundle base material had hard fiber bundles and was not obtained stably. Accordingly, the process passability was evaluated as "Acceptable". The obtained reinforcing fiber bundle base material had 1,667 fibers/mm of fiber number per unit width and drape level D1 of 242mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since the reinforcing fiber bundles were not desirably oriented and a reinforcing fiber base material having a stable width and stable strand interval was not produced, the AFP process stability was evaluated as "Acceptable".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "NG" because a few voids were observed in the fiber bundle. Accordingly, comprehensive evaluation (Good: Practicable level, NG: Unpractical level) was "NG" from these results.

(Example 7)

Fiber bundle [A-1] was wound off with a winder at constant speed of 10m/min through a vibration widening roll vibrating along the axis direction at 10 Hz to be subjected to a widening process, so that a widened fiber bundle having width of 36mm was prepared through a width restriction roll of 35mm width.

The evaluation was performed in the same manner as Example 4, except that the widened width was 36mm. When the reinforcing fiber bundle base material of 1,500m was prepared without any yarn breakage and wrapping, the reinforcing fiber bundle base material having a stable width was obtained. The obtained reinforcing fiber bundle base material had 1,389 fibers/mm of fiber number per unit width and drape level D1 of 225mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Example 8)

Fiber bundle [A-1] was wound off with a winder at constant speed of 10m/min through a vibration widening roll vibrating along the axis direction at 10 Hz to be subjected to a widening process, so that a widened fiber bundle having width of 69mm was prepared through a width restriction roll of 70mm width.

The evaluation was performed in the same manner as Example 4, except that the widened width was 69mm. When the reinforcing fiber bundle base material of 1,500m was prepared without any yarn breakage and wrapping, the reinforcing fiber bundle base material having a stable width was obtained. The obtained reinforcing fiber bundle base material had 725 fibers/mm of fiber number per unit width and drape level D1 of 164mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Comparative example 4)

Fiber bundle [A-1] was wound off with a winder at constant speed of 10m/min through a vibration widening roll vibrating along the axis direction at 10 Hz to be subjected to a widening process, so that a widened fiber bundle having width of 85mm was prepared through a width restriction roll of 90mm width.

The evaluation was performed in the same manner as Example 4, except that the widened width was 85mm. When the reinforcing fiber bundle base material of 1,500m was prepared, the reinforcing fiber bundle base material had thin fiber bundles and fiber bundle breakage and was not widened stably. Accordingly, the process passability was evaluated as "NG".

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Even without any yarn breakage and wrapping, since the reinforcing fiber bundles were not desirably oriented and a reinforcing fiber base material having a stable width and stable strand interval was not produced, the AFP process stability was evaluated as "Acceptable".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "NG" from these results.

(Example 9)

Fiber bundle [A-1] was wound off with a winder at constant speed of 10m/min through a vibration widening roll vibrating along the axis direction at 10 Hz to be subjected to a widening process, so that a widened fiber bundle having width of 35mm was prepared through a width restriction roll of 35mm width.

The evaluation was performed in the same manner as Example 5, except that the widened width was 35mm. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,429 fibers/mm of fiber number per unit width and drape level D1 of 229mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Comparative example 5)

Fiber bundle [A-1] was wound off with a winder at constant speed of 10m/min through a vibration widening roll vibrating along the axis direction at 10 Hz to be subjected to a widening process, so that a widened fiber bundle having width of 50mm was prepared through a width restriction roll of 50mm width.

The obtained widened fiber bundle wound off at constant speed of 5m/min was continuously immersed in sizing treatment liquid of sizing agent [S-1] diluted with pure water to coat the widened fiber bundle with the primary sizing agent. Then the widened fiber bundle coated with the primary sizing agent was dried to remove moisture with a hot roller heated to 150°C and a drying furnace (atmospheric condition) heated to 200°C. Adhesion amount of such obtained primary sizing agent-added widened fiber bundle was calculated as 1.5 wt% according to the above-described measurement method of adhesion amount of sizing agent or water-soluble polyamide. The widened fiber bundle was immersed in the sizing treatment liquid while the tension applied to the fiber bundle was being adjusted in case the width of widened fiber bundle was shrunk by surface tension. Then such an obtained primary sizing agent-added widened fiber bundle was continuously immersed in oleoresin treatment liquid of application resin [P-1] diluted with pure water to coat the sizing agent-added widened fiber bundle with the application resin. Then the sizing agent-added widened fiber bundle coated with the secondary sizing agent (application resin [P-1]) was dried to remove moisture with a hot roller heated to 130°C and a drying furnace (atmospheric condition) heated to 130°C, and was subjected to a heat treatment for 0.3 minutes to obtain a reinforcing fiber bundle base material. Adhesion amount of application resin of such obtained reinforcing fiber bundle base material was calculated as 2 wt% according to the above-described measurement method of adhesion amount of sizing agent or water-soluble polyamide. Besides such a calculated amount corresponds to a total adhesion amount which doesn't include the amount of sizing agent initially added to the sizing agent-added widened fiber bundle.

The evaluation was performed in the same manner as Example 4, except that the heat treatment was performed at 130°C for 0.3min. When the reinforcing fiber bundle base material of 1,500m was prepared, the reinforcing fiber bundle base material caused wrapping on the roller and was not obtained stably. Accordingly, the process passability was evaluated as "NG". The obtained reinforcing fiber bundle base material had 1,000 fibers/mm of fiber number per unit width and drape level D1 of 108mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since entanglement and fluff were observed while the reinforcing fiber bundles were not desirably oriented and a reinforcing fiber base material having a stable width and stable strand interval was not produced, the AFP process stability was evaluated as "NG".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "NG" from these results.

(Example 10)

The evaluation was performed in the same manner as Example 4, except that the heat treatment of secondary sizing agent was performed at 130°C for 15min. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,042 fibers/mm of fiber number per unit width and drape level D1 of 214mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Example 11)

The evaluation was performed in the same manner as Example 4, except that the heat treatment of secondary sizing agent was performed at 350°C for 0.4min. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,064 fibers/mm of fiber number per unit width and drape level D1 of 200mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Comparative example 6)

The evaluation was performed in the same manner as Example 4, except that the heat treatment of secondary sizing agent was performed at 350°C for 16min. When the reinforcing fiber bundle base material of 1,500m was prepared without any yarn breakage and wrapping, the reinforcing fiber bundle base material having a stable width was obtained in spite of partial fiber breakage. Accordingly, the process passability was evaluated as "Acceptable". The obtained reinforcing fiber bundle base material had 1,111 fibers/mm of fiber number per unit width and drape level D1 of 96mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Even without any yarn breakage, since partial wrapping and fluff were observed, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "NG" because voids were observed. Accordingly, comprehensive evaluation (Good: Practicable level, NG: Unpractical level) was "NG" from these results.

(Example 12)

The evaluation was performed in the same manner as Example 2, except that the primary sizing agent [S-1] was replaced by application resin [P-1] used for the continuous immersion of the widened fiber bundle prepared after fiber bundle [A-1] was wound off with a winder at constant speed of 10m/min through a vibration widening roll vibrating along the axis direction at 10 Hz to be subjected to a widening process. Adhesion amount of primary sizing agent (application resin [P-1]) was 0.5 wt% while adhesion amount of secondary sizing agent (application resin [P-1]) was 1.5 wt%. Besides, the adhesion amount of secondary sizing agent (application resin [P-1]) corresponds to a total adhesion amount which doesn't include the adhesion amount of primary sizing agent initially added to the sizing agent-added widened fiber bundle. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,000 fibers/mm of fiber number per unit width and drape level D1 of 198mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Example 13)

The evaluation was performed in the same manner as Example 4, except that application resin [P-1] was replaced by application resin [P-2]. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,042 fibers/mm of fiber number per unit width and drape level D1 of 224mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Example 14)

The evaluation was performed in the same manner as Example 4, except that application resin [P-1] was replaced by application resin [P-3]. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,111 fibers/mm of fiber number per unit width and drape level D1 of 211mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

(Example 15)

The evaluation was performed in the same manner as Example 4, except that application resin [P-1] was replaced by application resin [P-4]. When the reinforcing fiber bundle base material of 1,500m was prepared without any yarn breakage and wrapping, the reinforcing fiber bundle base material having a stable width was obtained. Accordingly, the process passability was evaluated as "Good". The obtained reinforcing fiber bundle base material had 1,000 fibers/mm of fiber number per unit width and drape level D1 of 214mm.

Then, the reinforcing fiber bundle base materials were parallelly-oriented on a stand with a fiber-placement head through which the obtained reinforcing fiber base material was continuously inserted to produce a reinforcing fiber base material having a shape of 250mm × 250mm square. Since unravelling characteristics were good without any yarn breakage and wrapping in producing a reinforcing fiber base material having a stable width and stable strand interval, the AFP process stability was evaluated as "Good".

Next, fiber-reinforced thermoplastic resin forming material was produced by impregnating reinforcing fiber bundle base material with matrix resin [M-1] according to the above-described production method. The impregnation of the obtained fiber-reinforced resin forming material was evaluated as "Good". Accordingly, comprehensive evaluation (Good: Practicable level, NG: Unpractical level) was "Good" from these results.

Next, weaving performance was evaluated.

(Reference example 1)

Reinforcing fiber bundle [A-2] rolled out by a winder constantly at 10m/min is fed to a vibrational widening roller vibrating in the axial direction at 10Hz to widen the width, and then is fed to a width regulation roller to make a widened fiber bundle.

Mother solution of application resin [P-1] dissolved or dispersed in water was added by adhesion amount of 3.2 wt% to reinforcing fiber bundle [A-2] by immersing method, and then was dried up at 250°C for 2min. As shown in Table 2, reinforcing fiber bundle [A-2] had fiber number per unit width of 1,540 fibers/mm, bundle thickness of 0.07mm, drape level of 138mm and bundle hardness of 81g. Widened reinforcing fiber bundle [A-2] was separated to make reinforcing fiber bundle (a) having width of 6.5mm.

(Reference example 2)

Reinforcing fiber bundle [A-2] rolled out by a winder constantly at 10m/min is fed to a vibrational widening roller vibrating in the axial direction at 10Hz to widen the width, and then is fed to a width regulation roller to make a widened fiber bundle.

Mother solution of application resin [P-1] dissolved or dispersed in water was added by adhesion amount of 6.1 wt% to reinforcing fiber bundle [A-2] by immersing method, and then was dried up at 250°C for 2min. As shown in Table 2, reinforcing fiber bundle [A-2] had fiber number per unit width of 1,430 fibers/mm, bundle thickness of 0.07mm, drape level of 231mm and bundle hardness of 210g. Widened reinforcing fiber bundle [A-2] was separated to make reinforcing fiber bundle (b) having width of 7.0mm.

(Reference example 3)

Reinforcing fiber bundle [A-2] rolled out by a winder constantly at 10m/min is fed to a vibrational widening roller vibrating in the axial direction at 10Hz to widen the width, and then is fed to a width regulation roller to make a widened fiber bundle.

Mother solution of application resin [P-2] dissolved or dispersed in water was added by adhesion amount of 3.3 wt% to reinforcing fiber bundle [A-2] by immersing method, and then was dried up at 250°C for 2min. As shown in Table 2, reinforcing fiber bundle [A-2] had fiber number per unit width of 550 fibers/mm, bundle thickness of 0.07mm, drape level of 127mm and bundle hardness of 76g. Widened reinforcing fiber bundle [A-2] was separated to make reinforcing fiber bundle (c) having width of 9.1mm.

(Reference example 4)

Reinforcing fiber bundle [A-3] rolled out by a winder constantly at 10m/min is fed to a vibrational widening roller vibrating in the axial direction at 10Hz to widen the width, and then is fed to a width regulation roller to make a widened fiber bundle.

Mother solution of application resin [P-2] dissolved or dispersed in water was added by adhesion amount of 3.8 wt% to reinforcing fiber bundle [A-3] by immersing method, and then was dried up at 250°C for 2min. As shown in Table 2, reinforcing fiber bundle [A-3] had fiber number per unit width of 2,200 fibers/mm, bundle thickness of 0.23mm, drape level of 220mm and bundle hardness of 191g. Widened reinforcing fiber bundle [A-3] was separated to make reinforcing fiber bundle (d) having width of 0.7mm.

(Reference example 5)

Mother solution of application resin [P-3] dissolved or dispersed in water was added by adhesion amount of 3.3 wt% to reinforcing fiber bundle [A-2] by immersing method, and then was dried up at 250°C for 2min. As shown in Table 2, reinforcing fiber bundle [A-2] had fiber number per unit width of 4,420 fibers/mm, bundle thickness of 0.36mm, drape level of 243mm and bundle hardness of 230g. Widened reinforcing fiber bundle [A-2] was separated to make reinforcing fiber bundle (e) having width of 5.7mm.

(Reference example 6)

Mother solution of application resin [P-3] dissolved or dispersed in water was added by adhesion amount of 4.7 wt% to reinforcing fiber bundle [A-2] by immersing method, and then was dried up at 250°C for 2min. As shown in Table 2, reinforcing fiber bundle [A-2] had fiber number per unit width of 5,110 fibers/mm, bundle thickness of 0.38mm, drape level of 246mm and bundle hardness of 254g. Widened reinforcing fiber bundle [A-2] was separated to make reinforcing fiber bundle (f) having width of 4.9mm.

(Reference example 7)

Mother solution of application resin [P-4] dissolved or dispersed in water was added by adhesion amount of 3.1 wt% to reinforcing fiber bundle [A-2] by immersing method, and then was dried up at 250°C for 2min. As shown in Table 2, reinforcing fiber bundle [A-2] had fiber number per unit width of 4,880 fibers/mm, bundle thickness of 0.4mm, drape level of 245mm and bundle hardness of 243g. Widened reinforcing fiber bundle [A-2] was separated to make reinforcing fiber bundle (g) having width of 5.1mm.

(Example 16)

A unidirectional woven fabric (plain-weave, carbon fiber basis weight of 200g/m$^2$) was produced from reinforcing fiber bundle (a) prepared in Reference example 1 at 1.1m/min with an air jet weaving machine (ZA100 made by Tsudakoma Corp.). Carbon fiber bundles (warp) unravelled from each bobbin were oriented and led directly to the weaving machine by insertion width of 127cm without warping. Glass fibers (made by Unitika Ltd.) of 22.5tex were used as weft. The warp length from the shedding-start point to the heald was set to 12 times of heald shedding. The weft was inserted at thread times of 340 times/min with one main nozzle (0.25MPa) and sixteen sub nozzles (0.4MPa). The sub nozzles of sixteen, consisting of two placed at interval of 70mm, six placed at interval of 55mm, four placed at interval of 50mm and four placed at interval of 45mm, were designed to have a shorter interval at a part closer to the weft insertion side. Table 3 shows results of resin impregnation characteristics and weaving performance.

(Example 17)

A unidirectional woven fabric (plain-weave, carbon fiber basis weight of 200g/m$^2$) was produced from reinforcing fiber bundle (b) prepared in Reference example 2 at 1.1m/min with an air jet weaving machine (ZA100 made by Tsudakoma Corp.). Carbon fiber bundles (warp) unravelled from each bobbin were oriented and led directly to the weaving machine by insertion width of 127cm without warping. Glass fibers (made by Unitika Ltd.) of 22.5tex were used as weft. The warp length from the shedding-start point to the heald was set to 12 times of heald shedding. The weft was inserted at thread times of 340 times/min with one main nozzle (0.25MPa) and sixteen sub nozzles (0.4MPa). The sub nozzles of sixteen, consisting of two placed at interval of 70mm, six placed at interval of 55mm, four placed at interval of 50mm and four placed at interval of 45mm, were designed to have a shorter interval at a part closer to the weft insertion side. Table 3 shows results of resin impregnation characteristics and weaving performance.

(Example 18)

A unidirectional woven fabric (plain-weave, carbon fiber basis weight of 200g/m$^2$) was produced from reinforcing fiber bundle (c) prepared in Reference example 3 at 1.1m/min with an air jet weaving machine (ZA100 made by Tsudakoma Corp.). Carbon fiber yarns (warp) unravelled from each bobbin were oriented and led directly to the weaving machine by insertion width of 127cm without warping. Glass fibers (made by Unitika Ltd.) of 22.5tex were used as weft. The warp length from the shedding-start point to the heald was set to 12 times of heald shedding. The weft was inserted at thread times of 340 times/min with one main nozzle (0.25MPa) and sixteen sub nozzles (0.4MPa). The sub nozzles of sixteen, consisting of two placed at interval of 70mm, six placed at interval of 55mm, four placed at interval of 50mm and four placed at interval of 45mm, were designed to have a shorter interval at a part closer to the weft insertion side. Table 3 shows results of resin impregnation characteristics and weaving performance.

(Comparative example 7)

A unidirectional woven fabric (plain-weave, carbon fiber basis weight of 200g/m$^2$) was produced from reinforcing fiber bundle (d) prepared in Reference example 4 at 1.1m/min with an air jet weaving machine (ZA100 made by Tsudakoma Corp.). Glass fiber yarns (warp) unravelled from each bobbin were oriented and led directly to the weaving machine by insertion width of 127cm without warping. Glass fibers (made by Unitika Ltd.) of 22.5tex were used as weft. The warp length from the shedding-start point to the heald was set to 12 times of heald shedding. The weft was inserted at thread times of 340 times/min with one main nozzle (0.25MPa) and sixteen sub nozzles (0.4MPa). The sub nozzles of sixteen, consisting of two placed at interval of 70mm, six placed at interval of 55mm, four placed at interval of 50mm and four placed at interval of 45mm, were designed to have a shorter interval at a part closer to the weft insertion side. Table 3 shows results of resin impregnation characteristics and weaving performance.

(Comparative example 8)

A unidirectional woven fabric (plain-weave, carbon fiber basis weight of 200g/m$^2$) was produced from reinforcing fiber bundle (e) prepared in Reference example 5 at 1.1m/min with an air jet weaving machine (ZA100 made by Tsudakoma Corp.). Carbon fiber yarns (warp) unravelled from each bobbin were oriented and led directly to the weaving machine by insertion width of 127cm without warping. Glass fibers (made by Unitika Ltd.) of 22.5tex were used as weft. The warp length from the shedding-start point to the heald was set to 12 times of heald shedding. The weft was inserted at thread times of 340 times/min with one main nozzle (0.25MPa) and sixteen sub nozzles (0.4MPa). The sub nozzles of sixteen, consisting of two placed at interval of 70mm, six placed at interval of 55mm, four placed at interval of 50mm and four placed at interval of 45mm, were designed to have a shorter interval at a part closer to the weft insertion side. Table 3 shows results of resin impregnation characteristics and weaving performance.

(Comparative example 9)

A unidirectional woven fabric (plain-weave, carbon fiber basis weight of 200g/m$^2$) was produced from reinforcing fiber bundle (f) prepared in Reference example 6 at 1.1m/min with an air jet weaving machine (ZA100 made by Tsudakoma Corp.). Carbon fiber yarns (warp) unravelled from each bobbin were oriented and led directly to the weaving machine by insertion width of 127cm without warping. Glass fibers (made by Unitika Ltd.) of 22.5tex were used as weft. The warp length from the shedding-start point to the heald was set to 12 times of heald shedding. The weft was inserted at thread times of 340 times/min with one main nozzle (0.25MPa) and sixteen sub nozzles (0.4MPa). The sub nozzles of sixteen, consisting of two placed at interval of 70mm, six placed at interval of 55mm, four placed at interval of 50mm and four placed at interval of 45mm, were designed to have a shorter interval at a part closer to the weft insertion side. Table 3 shows results of resin impregnation characteristics and weaving performance.

(Comparative example 10)

A unidirectional woven fabric (plain-weave, carbon fiber basis weight of 200g/m$^2$) was produced from reinforcing fiber bundle (g) prepared in Reference example 7 at 1.1m/min with an air jet weaving machine (ZA100 made by Tsudakoma Corp.). Carbon fiber yarns (warp) unravelled from each bobbin were oriented and led directly to the weaving machine by insertion width of 127cm without warping. Glass fibers (made by Unitika Ltd.) of 22.5tex were used as weft. The warp length from the shedding-start point to the heald was set to 12 times of heald shedding. The weft was inserted at thread times of 340 times/min with one main nozzle (0.25MPa) and sixteen sub nozzles (0.4MPa). The sub nozzles of sixteen, consisting of two placed at interval of 70mm, six placed at interval of 55mm, four placed at interval of 50mm and four placed at interval of 45mm, were designed to have a shorter interval at a part closer to the weft insertion side. Table 3 shows results of resin impregnation characteristics and weaving performance.

Next, fiber-reinforced thermoplastic resin forming material (the third embodiment) was evaluated.

(Example 19)

Reinforcing fiber bundle [A-2] rolled out by a winder constantly at 10m/min is fed to a vibrational widening roller vibrating in the axial direction at 10Hz to widen the width, and then is fed to a width regulation roller to adjust the widening of width.

Solution of application resin [P-1] dissolved in water was added by adhesion amount of 3.2 wt% to reinforcing fiber bundle [A-2] by immersing method, and then was dried up at 250°C for 2min. As shown in Table 4, sizing agent-added reinforcing fiber bundle [A-2] had fiber number per unit width of 1,540 fibers/mm, bundle thickness of 0.07mm, drape level of 138mm and bundle hardness of 81g.

The sizing agent-added reinforcing fiber bundle fed to a die opening (diameter 3mm) for coating with melted resin was impregnated with matrix resin [M-1] melted at screw rotation speed of 200rpm after being fed from main hopper to be discharged to the die opening provided at the tip discharge section of single screw extruder of long fiber-reinforced resin pellet manufacturing apparatus. The obtained strand was cooled down and then cut into 10mm of pellet length with a pelletizer to prepare long fiber pellets.

The fiber length of reinforcing fiber contained in the pellet was substantially the same as the pellet length. Matrix resin [M-1] of 100 parts by weight contained reinforcing fiber bundle [A-2] of 30 parts by weight.

From the long fiber pellets, a test piece (shaped product) for evaluating characteristics was formed with an injection molding machine of SE75DUZ-C250 type made by Sumitomo Heavy Industries, Ltd., operated in a condition of injection time of 10sec, keeping pressure at pressure of lower molding limit pressure + 10 MPa, keeping time of 10sec, cylinder temperature of 230°C and die temperature of 110°C. The prepared test piece was subjected to evaluation of bending characteristics, after being left to stand for 24 hours in a constant temperature and humidity room adjusted to 23°C and 50%RH. Table 4 shows the results.

(Example 20)

Reinforcing fiber bundle [A-2] rolled out by a winder constantly at 10m/min is fed to a vibrational widening roller vibrating in the axial direction at 10Hz to widen the width, and then is fed to a width regulation roller to adjust the widening of width.

Solution of application resin [P-2] dissolved in water was added by adhesion amount of 6.1 wt% to reinforcing fiber bundle [A-2] by immersing method, and then was dried up at 250°C for 2min. As shown in Table 4, sizing agent-added reinforcing fiber bundle [A-2] had fiber number per unit width of 1,430 fibers/mm, bundle thickness of 0.07mm, drape level of 231mm and bundle hardness of 210g.

The sizing agent-added reinforcing fiber bundle fed to a die opening (diameter 3mm) for coating with melted resin was impregnated with matrix resin [M-1] melted at screw rotation speed of 200rpm after being fed from main hopper to be discharged to the die opening provided at the tip discharge section of single screw extruder of long fiber-reinforced resin pellet manufacturing apparatus. The obtained strand was cooled down and then cut into 10mm of pellet length with a pelletizer to prepare long fiber pellets.

The fiber length of reinforcing fiber contained in the pellet was substantially the same as the pellet length. Matrix resin [M-1] of 100 parts by weight contained reinforcing fiber bundle [A-2] of 30 parts by weight.

From the long fiber pellets, a test piece (shaped product) for evaluating characteristics was formed with an injection molding machine of SE75DUZ-C250 type made by Sumitomo Heavy Industries, Ltd., operated in a condition of injection time of 10sec, keeping pressure at pressure of lower molding limit pressure + 10 MPa, keeping time of 10sec, cylinder temperature of 230°C and die temperature of 110°C. The prepared test piece was subjected to evaluation of bending characteristics, after being left to stand for 24 hours in a constant temperature and humidity room adjusted to 23°C and 50%RH. Table 4 shows the results.

(Example 21)

Reinforcing fiber bundle [A-3] rolled out by a winder constantly at 10m/min is fed to a vibrational widening roller vibrating in the axial direction at 10Hz to widen the width, and then is fed to a width regulation roller to adjust the widening of width.

Solution of application resin [P-2] dissolved in water was added by adhesion amount of 3.3 wt% to reinforcing fiber bundle [A-3] by immersing method, and then was dried up at 250°C for 2min. As shown in Table 4, sizing agent-added reinforcing fiber bundle [A-3] had fiber number per unit width of 550 fibers/mm, bundle thickness of 0.07mm, drape level of 127mm and bundle hardness of 76g.

The sizing agent-added reinforcing fiber bundle fed to a die opening (diameter 3mm) for coating with melted resin was impregnated with matrix resin [M-1] melted at screw rotation speed of 200rpm after being fed from main hopper to be discharged to the die opening provided at the tip discharge section of single screw extruder of long fiber-reinforced resin pellet manufacturing apparatus. The obtained strand was cooled down and then cut into 10mm of pellet length with a pelletizer to prepare long fiber pellets.

The fiber length of reinforcing fiber contained in the pellet was substantially the same as the pellet length. Matrix resin [M-1] of 100 parts by weight contained reinforcing fiber bundle [A-2] of 30 parts by weight. From the long fiber pellets, a test piece (shaped product) for evaluating characteristics was formed with an injection molding machine of SE75DUZ-C250 type made by Sumitomo Heavy Industries, Ltd., operated in a condition of injection time of 10sec, keeping pressure at pressure of lower molding limit pressure + 10 MPa, keeping time of 10sec, cylinder temperature of 230°C and die temperature of 110°C. The prepared test piece was subjected to evaluation of bending characteristics, after being left to stand for 24 hours in a constant temperature and humidity room adjusted to 23°C and 50%RH. Table 4 shows the results.

(Example 22)

Reinforcing fiber bundle [A-2] rolled out by a winder constantly at 10m/min is fed to a vibrational widening roller vibrating in the axial direction at 10Hz to widen the width, and then is fed to a width regulation roller to adjust the widening of width.

Solution of application resin [P-3] dissolved in water was added by adhesion amount of 3.8 wt% to reinforcing fiber bundle [A-2] by immersing method, and then was dried up at 250°C for 2min. As shown in Table 4, sizing agent-added reinforcing fiber bundle [A-2] had fiber number per unit width of 2,200 fibers/mm, bundle thickness of 0.23mm, drape level of 220mm and bundle hardness of 191g.

The sizing agent-added reinforcing fiber bundle fed to a die opening (diameter 3mm) for coating with melted resin was impregnated with matrix resin [M-2] melted at screw rotation speed of 200rpm after being fed from main hopper to be discharged to the die opening provided at the tip discharge section of single screw extruder of long fiber-reinforced resin pellet manufacturing apparatus. The obtained strand was cooled down and then cut into 10mm of pellet length with a pelletizer to prepare long fiber pellets.

The fiber length of reinforcing fiber contained in the pellet was substantially the same as the pellet length. Matrix resin [M-2] of 100 parts by weight contained reinforcing fiber bundle [A-2] of 30 parts by weight.

From the long fiber pellets, a test piece (shaped product) for evaluating characteristics was formed with an injection molding machine of SE75DUZ-C250 type made by Sumitomo Heavy Industries, Ltd., operated in a condition of injection time of 10sec, keeping pressure at pressure of lower molding limit pressure + 10 MPa, keeping time of 10sec, cylinder temperature of 230°C and die temperature of 110°C. The prepared test piece was subjected to evaluation of bending characteristics, after being left to stand for 24 hours in a constant temperature and humidity room adjusted to 23°C and 50%RH. Table 4 shows the results.

(Comparative example 11)

Without performing the width widening process, Solution of application resin [P-3] dissolved in water was added by adhesion amount of 3.3 wt% to reinforcing fiber bundle [A-2] by immersing method, and then was dried up at 250°C for 2min. As shown in Table 4, sizing agent-added reinforcing fiber bundle [A-2] had fiber number per unit width of 4,420 fibers/mm, bundle thickness of 0.36mm, drape level of 243mm and bundle hardness of 230g.

The sizing agent-added reinforcing fiber bundle fed to a die opening (diameter 3mm) for coating with melted resin was impregnated with matrix resin [M-1] melted at screw rotation speed of 200rpm after being fed from main hopper to be discharged to the die opening provided at the tip discharge section of single screw extruder of long fiber-reinforced resin pellet manufacturing apparatus. The obtained strand was cooled down and then cut into 10mm of pellet length with a pelletizer to prepare long fiber pellets.

The fiber length of reinforcing fiber contained in the pellet was substantially the same as the pellet length. Matrix resin [M-1] of 100 parts by weight contained reinforcing fiber bundle [A-2] of 30 parts by weight.

From the long fiber pellets, a test piece (shaped product) for evaluating characteristics was formed with an injection molding machine of SE75DUZ-C250 type made by Sumitomo Heavy Industries, Ltd., operated in a condition of injection time of 10sec, keeping pressure at pressure of lower molding limit pressure + 10 MPa, keeping time of 10sec, cylinder temperature of 230°C and die temperature of 110°C. The prepared test piece was subjected to evaluation of bending characteristics, after being left to stand for 24 hours in a constant temperature and humidity room adjusted to 23°C and 50%RH. Table 4 shows the results.

(Comparative example 12)

Without performing the width widening process, Solution of application resin [P-4] dissolved in water was added by adhesion amount of 4.7 wt% to reinforcing fiber bundle [A-2] by immersing method, and then was dried up at 250°C for 2min. As shown in Table 4, sizing agent-added reinforcing fiber bundle [A-2] had fiber number per unit width of 5,110 fibers/mm, bundle thickness of 0.38mm, drape level of 246mm and bundle hardness of 254g.

The sizing agent-added reinforcing fiber bundle fed to a die opening (diameter 3mm) for coating with melted resin was impregnated with matrix resin [M-1] melted at screw rotation speed of 200rpm after being fed from main hopper to be discharged to the die opening provided at the tip discharge section of single screw extruder of long fiber-reinforced resin pellet manufacturing apparatus. The obtained strand was cooled down and then cut into 10mm of pellet length with a pelletizer to prepare long fiber pellets.

The fiber length of reinforcing fiber contained in the pellet was substantially the same as the pellet length. Matrix resin [M-1] of 100 parts by weight contained reinforcing fiber bundle [A-2] of 30 parts by weight.

From the long fiber pellets, a test piece (shaped product) for evaluating characteristics was formed with an injection molding machine of SE75DUZ-C250 type made by Sumitomo Heavy Industries, Ltd., operated in a condition of injection time of 10sec, keeping pressure at pressure of lower molding limit pressure + 10 MPa, keeping time of 10sec, cylinder temperature of 230°C and die temperature of 110°C. The prepared test piece was subjected to evaluation of bending characteristics, after being left to stand for 24 hours in a constant temperature and humidity room adjusted to 23°C and 50%RH. Table 4 shows the results.

(Comparative example 13)

Without performing the width widening process, Solution of application resin [P-4] dissolved in water was added by adhesion amount of 3.1 wt% to reinforcing fiber bundle [A-2] by immersing method, and then was dried up at 250°C for 2min. As shown in Table 4, sizing agent-added reinforcing fiber bundle [A-2] had fiber number per unit width of 4,880 fibers/mm, bundle thickness of 0.4mm, drape level of 245mm and bundle hardness of 243g.

The sizing agent-added reinforcing fiber bundle fed to a die opening (diameter 3mm) for coating with melted resin was impregnated with matrix resin [M-2] melted at screw rotation speed of 200rpm after being fed from main hopper to be discharged to the die opening provided at the tip discharge section of single screw extruder of long fiber-reinforced resin pellet manufacturing apparatus. The obtained strand was cooled down and then cut into 10mm of pellet length with a pelletizer to prepare long fiber pellets.

The fiber length of reinforcing fiber contained in the pellet was substantially the same as the pellet length. Matrix resin [M-2] of 100 parts by weight contained reinforcing fiber bundle [A-2] of 30 parts by weight.

From the long fiber pellets, a test piece (shaped product) for evaluating characteristics was formed with an injection molding machine of SE75DUZ-C250 type made by Sumitomo Heavy Industries, Ltd., operated in a condition of injection time of 10sec, keeping pressure at pressure of lower molding limit pressure + 10 MPa, keeping time of 10sec, cylinder temperature of 230°C and die temperature of 110°C. The prepared test piece was subjected to evaluation of bending characteristics, after being left to stand for 24 hours in a constant temperature and humidity room adjusted to 23°C and 50%RH. Table 4 shows the results.

[Table 1]

| Item | | Unit | Example 1 | Example 2 | Example 3 | Example 4 | Example 5 | Example 6 | Comparative example 1 | Comparative example 2 | Comparative example 3 | Example 7 | Example 8 | Comparative example 4 | Example 9 | Comparative example 5 | Example 10 | Example 11 | Comparative example 6 | Example 12 | Example 13 | Example 14 | Example 15 |
|---|---|---|---|---|---|---|---|---|---|---|---|---|---|---|---|---|---|---|---|---|---|---|---|
| Fiber | | - | A-1 | A-1 | A-1 | A-1 | A-1 | A-1 | A-1 | A-1 | A-1 | A-1 | A-1 | A-1 | A-1 | A-1 | A-1 | A-1 | A-1 | A-1 | A-1 | A-1 | A-1 |
| Matrix resin | | - | M-1 | M-1 | M-1 | M-1 | M-1 | M-1 | M-1 | M-1 | M-1 | M-1 | M-1 | M-1 | M-1 | M-1 | M-1 | M-1 | M-1 | M-1 | M-1 | M-1 | M-1 |
| Primary sizing agent | | - | S-1 | S-1 | S-1 | S-1 | S-1 | S-1 | S-1 | S-1 | S-1 | S-1 | S-1 | S-1 | S-1 | S-1 | S-1 | S-1 | S-1 | P-1 | S-1 | S-1 | S-1 |
| Adhesion amount of primary sizing agent | | wt% | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Secondary sizing agent | | - | P-1 | P-1 | P-1 | P-1 | P-1 | P-1 | P-1 | P-1 | P-1 | P-1 | P-1 | P-1 | P-1 | P-1 | P-1 | P-1 | P-1 | P-1 | P-2 | P-3 | P-4 |
| Adhesion amount of secondary sizing agent | | wt% | 0.1 | 0.5 | 1.0 | 2.0 | 3.0 | 5.0 | 7.0 | 0.0 | 2.0 | 2.0 | 2.0 | 2.0 | 3.0 | 2.0 | 2.0 | 2.0 | 2.0 | 0.5 | 2.0 | 2.0 | 2.0 |
| Heat-treatment temperature | | °C | 250.0 | 250.0 | 250.0 | 250.0 | 250.0 | 250.0 | 250.0 | 250.0 | 250.0 | 250.0 | 250.0 | 250.0 | 250.0 | 130.0 | 130.0 | 350.0 | 350.0 | 250.0 | 250.0 | 250.0 | 250.0 |
| Heat-treatment time | | min | 1.5 | 1.5 | 1.5 | 1.5 | 1.5 | 1.5 | 1.5 | 1.5 | 1.5 | 1.5 | 1.5 | 1.5 | 1.5 | 0.3 | 15.0 | 0.4 | 16.0 | 1.5 | 1.5 | 1.5 | 1.5 |
| Fiber number per unit width | | fibers/mm | 1000 | 1111 | 1020 | 1087 | 1111 | 1020 | 1000 | 1000 | 1667 | 1389 | 725 | 588 | 1429 | 1000 | 1042 | 1064 | 1111 | 1000 | 1042 | 1111 | 1000 |
| Fiber bundle thickness | | mm | 0.07 | 0.08 | 0.07 | 0.08 | 0.08 | 0.07 | 0.07 | 0.07 | 0.12 | 0.10 | 0.05 | 0.04 | 0.10 | 0.07 | 0.07 | 0.07 | 0.08 | 0.07 | 0.07 | 0.08 | 0.07 |
| Fiber bundle width | W1 before immersion | mm | 50 | 45 | 49 | 46 | 45 | 49 | 50 | 50 | 30 | 36 | 69 | 85 | 35 | 50 | 48 | 47 | 45 | 50 | 48 | 45 | 50 |
| | W2 after immersion | mm | 33 | 38 | 41 | 38 | 39 | 44 | 47 | 5 | 28 | 32 | 60 | 72 | 31 | 21 | 44 | 36 | 20 | 43 | 44 | 38 | 43 |
| | Change rate W2/W1 | - | 0.66 | 0.84 | 0.84 | 0.83 | 0.87 | 0.90 | 0.94 | 0.10 | 0.93 | 0.89 | 0.87 | 0.85 | 0.89 | 0.42 | 0.92 | 0.77 | 0.44 | 0.86 | 0.92 | 0.84 | 0.86 |
| | Width precision W1±α | mm | 0.9 | 0.7 | 0.5 | 0.5 | 0.6 | 0.6 | 1.0 | 1.5 | 0.8 | 0.5 | 0.5 | 1.2 | 0.7 | 1.3 | 0.7 | 0.6 | 1.5 | 0.5 | 0.7 | 0.7 | 0.7 |
| Drape level | D1 before immersion | mm | 130 | 153 | 171 | 210 | 215 | 235 | 242 | 39 | 242 | 225 | 164 | 115 | 229 | 108 | 214 | 200 | 96 | 198 | 224 | 211 | 214 |
| | D2 after immersion | mm | 129 | 156 | 180 | 210.2 | 214 | 234 | 241 | 38 | 241 | 223 | 196 | 117 | 227 | 50 | 211 | 197 | 70 | 190 | 221 | 207 | 216 |
| Hardness | | g | 40 | 95.2 | 118.2 | 117.2 | 150.2 | 168.0 | >200 | 11.2 | 179.7 | 149.7 | 78.1 | 63.4 | 196.6 | 96.8 | 127.0 | 110.1 | 61.0 | 119.3 | 121.6 | 120.1 | 120.9 |
| Process passability | | - | Acceptable | Good | Good | Good | Good | Good | NG | NG or Acceptable | Acceptable | Good | Good | NG | Good | NG | Good | Good | Acceptable | Good | Good | Good | Good |
| AFP process stability | | - | Acceptable | Good | Good | Good | Good | Good | NG | NG | Acceptable | Good | Good | Acceptable | Good | NG | Good | Good | Acceptable | Good | Good | Good | Good |
| Impregnation evaluation | | - | Good | Good | Good | Good | Good | Good | Good | NG | NG | Good | Good | Good | Good | Good | Good | Good | NG | Good | Good | Good | Good |
| Comprehensive evaluation | | - | Good | Good | Good | Good | Good | Good | NG | NG | NG | Good | Good | NG | Good | NG | Good | Good | NG | Good | Good | Good | Good |

[Table 2]

| Continuous fiber bundle | | Fiber number in bundle | Secondary sizing agent | | Drape [mm] | Bundle hardness [g] | Single yarn number per unit width [fibers/mm] | Thickness [mm] | Adhesion amount of sizing agent [mass%] | Width change rate W2/W1 | Bundle width after fiber separation [mm] |
|---|---|---|---|---|---|---|---|---|---|---|---|
| Reference example 1 | Reinforcing fiber bundle (a) (carbon fiber bundle) | 50,000 | Application resin [P-1] | Water-soluble polyamide T-70 | 138 | 81 | 1,540 | 0.07 | 3.2 | 0.9 | 6.5 |
| Reference example 2 | Reinforcing fiber bundle (b) (carbon fiber bundle) | 50,000 | Application resin [P-1] | Water-soluble polyamide T-70 | 231 | 210 | 1,430 | 0.07 | 6.1 | 0.8 | 7.0 |
| Reference example 3 | Reinforcing fiber bundle (c) (carbon fiber bundle) | 50,000 | Application resin [P-2] | Water-soluble polyamide A-90 | 127 | 76 | 550 | 0.07 | 3.3 | 0.9 | 9.1 |
| Reference example 4 | Reinforcing fiber bundle (d) (glass fiber bundle) | 1,600 | Application resin [P-2] | Water-soluble polyamide A-90 | 220 | 191 | 2,200 | 0.23 | 3.8 | 0.8 | 0.7 |
| Reference example 5 | Reinforcing fiber bundle (e) (carbon fiber bundle) | 50,000 | Application resin [P-3] | Water-soluble polyamide P-70 | 243 | 230 | 4,420 | 0.36 | 3.3 | 0.9 | 5.7 |
| Reference example 6 | Reinforcing fiber bundle (f) (carbon fiber bundle) | 50,000 | Application resin [P-3] | Water-soluble polyamide P-70 | 246 | 254 | 5,110 | 0.38 | 4.7 | 0.8 | 4.9 |
| Reference example 7 | Reinforcing fiber bundle (g) (carbon fiber bundle) | 50,000 | Application resin [P-4] | Water-soluble polyamide P-95 | 245 | 243 | 4,880 | 0.40 | 3.1 | 0.9 | 5.1 |

[Table 3]

| | Continuous fiber bundle | | Woven fabric | |
|---|---|---|---|---|
| | | | Weaving performance | Resin impregnation characteristics |
| Example 16 | Reference example 1 | Reinforcing fiber bundle (a) (carbon fiber bundle) | A | A |
| Example 17 | Reference example 2 | Reinforcing fiber bundle (b) (carbon fiber bundle) | A | B |
| Example 18 | Reference example 3 | Reinforcing fiber bundle (c) (carbon fiber bundle) | A | A |
| Comparative example 7 | Reference example 4 | Reinforcing fiber bundle (d) (glass fiber bundle) | C | B |
| Comparative example 8 | Reference example 5 | Reinforcing fiber bundle (e) (carbon fiber bundle) | C | C |
| Comparative example 9 | Reference example 6 | Reinforcing fiber bundle (f) (carbon fiber bundle) | C | C |
| Comparative example 10 | Reference example 7 | Reinforcing fiber bundle (g) (carbon fiber bundle) | C | C |

[Table 4]

| | Reinforcing fiber bundle | Widening process | Single yarn number per unit width [fibers/mm] | Average bundle thickness [mm] | Second sizing agent added in process (2) | Adhesion amount of sizing agent [wt%] | Drape level [mm] | Bundle hardness [g] | Impregnated thermoplastic resin | Bending properties | |
|---|---|---|---|---|---|---|---|---|---|---|---|
| | | | | | | | | | | Bending strength | Bending strength CV level |
| Example 19 | [A-2] | Present | 1,540 | 0.07 | Application resin [P-1] | 3.2 | 138 | 81 | Matrix resin [M-1] | A | A |
| Example 20 | [A-2] | Present | 1,430 | 0.07 | Application resin [P-2] | 6.1 | 231 | 210 | Matrix resin [M-1] | B | B |
| Example 21 | [A-3] | Present | 550 | 0.07 | Application resin [P-2] | 3.3 | 127 | 76 | Matrix resin [M-1] | B | A |
| Example 22 | [A-2] | Present | 2,200 | 0.23 | Application resin [P-3] | 3.8 | 220 | 191 | Matrix resin [M-2] | B | B |
| Comparative example 11 | [A-2] | - | 4,420 | 0.36 | Application resin [P-3] | 3.3 | 243 | 230 | Matrix resin [M-1] | C | C |
| Comparative example 12 | [A-2] | - | 5,110 | 0.38 | Application resin [P-4] | 4.7 | 246 | 254 | Matrix resin [M-1] | C | C |
| Comparative example 13 | [A-2] | - | 4,880 | 0.40 | Application resin [P-4] | 3.1 | 245 | 243 | Matrix resin [M-2] | C | C |

Industrial Applications of the Invention

Our invention applicable to fiber bundles consisting of a plurality of single yarns can keep a desirable formation by adding application resin at an appropriate timing. Specifically by employing reinforcing fibers, the obtained fiber-reinforced resin material impregnated with matrix resin can be used widely as reinforcing fiber composite material.

Explanation of symbols

| | |
|---|---|
| 100: | reinforcing fiber bundle base material |
| 101: | bobbin (reinforcing fiber) |
| 102: | reinforcing fiber bundle |
| 103: | fiber-opening unit |
| 104: | width restriction roller |
| 105: | application resin solution |
| 106: | squeezing roller |
| 107: | heater roll |
| 180: | separated fiber bundle |
| 201: | reinforcing fiber base material |
| 202: | reinforcing fiber bundle group |
| 300: | fiber opening/widening process |
| 301: | fiber separation process |
| 400: | sizing agent-addition process |
| 401: | sizing agent-application process |
| 402: | drying process |
| 500: | heat treatment process |
| A - O: | pattern |
| a: | fiber bundle running direction |

**Claims**

1. A reinforcing fiber bundle base material having a reinforcing fiber surface to which a sizing agent adheres, wherein a reinforcing fiber bundle has a fiber number per unit width of 600 fibers/mm or more and less than 1,600 fibers/mm while the reinforcing fiber bundle has a drape level of 120 mm or more and 240 mm or less.

2. The reinforcing fiber bundle base material according to claim 1, wherein the sizing agent contains a polyamide-based resin.

3. The reinforcing fiber bundle base material according to claim 1 or 2, wherein the sizing agent contains a compound having a functional group of epoxy group, urethane group, amino group or carboxyl group or contains a mixture thereof.

4. The reinforcing fiber bundle base material according to any one of claims 1 to 3, wherein a polyamide-based resin is in an outermost layer of the reinforcing fiber bundle surface.

5. The reinforcing fiber bundle base material according to any one of claims 1 to 4, having a hardness of 39 g or more and 200 g or less.

6. The reinforcing fiber bundle base material according to any one of claims 1 to 5, having an adhesion amount of a polyamide-based resin of 0.1 wt% or more and 5 wt% or less.

7. The reinforcing fiber bundle base material according to any one of claims 1 to 6, having a width W1 before being immersed in water and having a width W2 after being immersed in water at 25°C for 5 min, wherein a width change rate of W2/W1 is 0.5 or more and 1.1 or less.

8. The reinforcing fiber bundle base material according to any one of claims 1 to 7, having a drape level D2 in an air after being immersed in water at 25°C for 5 min and absolutely dried, wherein the drape level D2 is 110 mm or more and 240 mm or less.

9. The reinforcing fiber bundle base material according to any one of claims 1 to 8, wherein the reinforcing fiber bundle has an average width W1 and a width precision of W1 - 1 mm or more and W1 + 1 mm or less.

10. A fiber-reinforced thermoplastic resin forming material comprising a group of the reinforcing fiber bundle base material, comprising a nonwoven fabric of the reinforcing fiber bundle base material according to any one of claims 1 to 9.

11. A fiber-reinforced thermoplastic resin forming material comprising a group of the reinforcing fiber bundle base material, comprising a woven fabric of the reinforcing fiber bundle base material according to any one of claims 1 to 9.

12. The fiber-reinforced thermoplastic resin forming material according to claim 10 or 11, containing a matrix resin.

13. The fiber-reinforced thermoplastic resin forming material according to claim 12, wherein the matrix resin is made of a polyamide.

14. A production method of reinforcing fiber bundle base material, comprising processes (1) and (2),
the process (1) widening a reinforcing fiber bundle consisting of a plurality of single yarns,
the process (2) performing a heat treatment after adding a sizing agent made of a water-soluble polyamide to the widened reinforcing fiber bundle

15. The production method of reinforcing fiber bundle base material according to claim 14, wherein the process (2) applies to the reinforcing fiber bundle a polymer solution of the water-soluble polyamide having a concentration of 0.1 wt% or more and 20 wt% or less.

16. The production method of reinforcing fiber bundle base material according to claim 14 or 15, wherein the water-soluble polyamide has a tertiary amino group and/or an oxyethylene group in a main chain and is made by polymerizing diamine and carboxylic acid.

17. A production method of fiber-reinforced thermoplastic resin forming material, comprising processes (1) to (4),
the process (1) widening a reinforcing fiber bundle consisting of a plurality of single yarns,
the process (2) performing a heat treatment after adding a sizing agent made of a water-soluble polyamide to the widened reinforcing fiber bundle,
the process (3) impregnating a sizing agent-added reinforcing fiber bundle with a melted thermoplastic resin,
the process (4) cutting the thermoplastic resin-impregnated reinforcing fiber bundle to prepare a fiber-reinforced thermoplastic resin forming material.

18. The production method of fiber-reinforced thermoplastic resin forming material according to claim 17, wherein the process (2) performs a heat treatment at 130 to 350°C after applying the water-soluble polyamide to the reinforcing fiber bundle.

19. The production method of fiber-reinforced thermoplastic resin forming material according to claim 17 or 18, wherein the process (2) performs a heat treatment for 0.33 to 15 min after applying the water-soluble polyamide to the reinforcing fiber bundle.

20. The production method of fiber-reinforced thermoplastic resin forming material according to any one of claims 17 to 19, wherein the process (2) applies to the reinforcing fiber bundle a polymer solution of the water-soluble polyamide having a concentration of 0.1 wt% or more and 20 wt% or less.

21. The production method of fiber-reinforced thermoplastic resin forming material according to any one of claims 17 to 20, wherein the water-soluble polyamide has a tertiary amino group and/or an oxyethylene group in a main chain and is made by polymerizing diamine and carboxylic acid.

FIG. 1

a →

101  102  107  100

104  105  106

103

FIG. 2

202  100

201

FIG. 3

Reinforcing fiber bunch 102

Pattern A

300

Fiber opening/widening process

401

Sizing agent-application process

Pattern B

402

Drying process

Reinforcing fiber budle base material 100

## FIG. 4

Reinforcing fiber bundle 102

Pattern C

400
Sizing agent-addition process

300

Fiber opening/widening process

401
Sizing agent-application process

402
Drying process

Pattern D

Reinforcing fiber bundle base material 100

## FIG. 5

Reinforcing fiber bundle 102

Pattern E

400
Sizing agent-addition process

300

Fiber opening/widening process

401
Sizing agent-application process

402
Drying process

500

Pattern F

Heat treatment process

Reinforcing fiber bundle base material 100

## FIG. 6

Reinforcing fiber bundle 102

Pattern G

300

Fiber opening/widening process

400
Sizing agent-addition process

401

Drying process

Pattern H

500

Heat treatment process

Reinforcing fiber bundle base material 100

## FIG. 7

Reinforcing fiber bundle 102

Pattern I

400
Sizing agent-addition process

301

Fiber separation process

Sizing agent-application process 401

Drying process 402

Heat treatment process 500

Pattern J

Separated fiber bundle 180

## FIG. 8

Reinforcing fiber bundle 102

Pattern K

400
Sizing agent-addition process

300

Fiber opening/widening process

Pattern L

Sizing agent-application process 401

Drying process 402

Heat treatment process 500

301

Fiber separation process

Pattern M

Separated fiber bundle 180

## FIG. 9

Reinforcing fiber bundle 102

Sizing agent-application process 401

301 Fiber separation process

Drying process 402

Heat treatment process 500

Separated fiber bundle 180

## FIG. 10

Reinforcing fiber bundle 102

↓

401

Sizing agent-application process

↓ 300

Fiber opening/widening process

↓

301 ⌐ Fiber separation process    Pattern N ·····→

402 ⌐ Drying process

500 ⌐ Heat treatment process

Pattern O ·····→

↓

Separated fiber bundle 180

## FIG. 11

Reinforcing fiber bundle 102

300 ⌐

Fiber opening/widening process

↓

401 ⌐ Sizing agent-application process

↓

301 ⌐ Fiber separation process

↓

402 ⌐ Drying process

↓

500 ⌐ Heat treatment process

↓

Separated fiber bundle 180

## FIG. 12

25cm

Drape level

## INTERNATIONAL SEARCH REPORT

| International application No. |
| --- |
| PCT/JP2019/001220 |

**A. CLASSIFICATION OF SUBJECT MATTER**
Int. Cl. B29B15/12(2006.01)i, C08J5/06(2006.01)i, D06M15/55(2006.01)i, D06M15/59(2006.01)i, B29K105/08(2006.01)n

According to International Patent Classification (IPC) or to both national classification and IPC

**B. FIELDS SEARCHED**

Minimum documentation searched (classification system followed by classification symbols)
Int. Cl. B29B15/12, C08J5/06, D06M15/55, D06M15/59, B29K105/08

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2002-138370 A (TORAY INDUSTRIES, INC.) 14 May 2002, paragraphs [0014]-[0057] (Family: none) | 14-16 |
| Y |  | 1-13, 16-21 |
| X | WO 2014/81002 A1 (MITSUBISHI RAYON CO., LTD.) 30 May 2014, paragraphs [0020]-[0080] & US 2015/0315364 A1, paragraphs [0039]-[0123] & EP 2924164 A1 & CN 104812957 A & KR 10-2015-0074162 A & TW 201434902 A | 14, 15 |
| Y |  | 16 |
| Y | JP 2003-105676 A (TORAY INDUSTRIES, INC.) 09 April 2003, paragraphs [0012]-[0075] (Family: none) | 16 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08.04.2019 | 16.04.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
|---|
| PCT/JP2019/001220 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 1-292038 A (TORAY INDUSTRIES, INC.) 24 November 1989, page 1, lower right column, line 5 to page 6, lower left column, line 20, fig. 1-4 (Family: none) | 1-13 |
| Y | WO 2012/081407 A1 (TORAY INDUSTRIES, INC.) 21 June 2012, paragraphs [0102]-[0108] & US 2013/0274413 A1, paragraphs [0132]-[0139] | 1-13 |
| Y | WO 2016/143371 A1 (TORAY INDUSTRIES, INC.) 15 September 2016, paragraphs [0121], [0153]-[0177] & EP 3266928 A1, paragraphs [0121], [0157]-[0181] | 10-13 |
| Y | JP 2017-531743 A (OCV INTELLECTUAL CAPITAL, LLC) 26 October 2017, claims 14, 15, paragraph [0018] & US 2017/0305075 A1, claim 12 | 17-21 |
| A | JP 2016-194175 A (TOYOTA MOTOR CORP.) 17 November 2016, entire text (Family: none) | 1-21 |
| A | JP 2015-507650 A (TORAY CARBON FIBERS AMERICA, INC.) 12 March 2015, entire text & US 2013/0143025 A1, entire document & WO 2013/086118 A1 | 1-21 |
| A | JP 2013-104156 A (SUMITOMO SEIKA CHEMICALS CO., LTD.) 30 May 2013, entire text (Family: none) | 1-21 |
| P, X<br>P, A | WO 2018/143067 A1 (TORAY INDUSTRIES, INC.) 09 August 2018, entire text & TW 201840393 A | 1-8, 10, 12-21<br>9, 11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013532739 A
- WO 2007037260 A
- WO 2003012188 A
- JP 2016190923 A
- JP 2005239843 A
- JP 2013177560 A
- JP 2013117014 A